(19) Europäisches Patentamt
European Patent Office
Office européen des brevets

(11) EP 3 389 131 B1

(12) **EUROPEAN PATENT SPECIFICATION**

(45) Date of publication and mention of the grant of the patent:
**05.08.2020 Bulletin 2020/32**

(21) Application number: **16873037.2**

(22) Date of filing: **07.12.2016**

(51) Int Cl.:
***H01M 10/12*** (2006.01) ***H01M 2/18*** (2006.01)
***H01M 4/14*** (2006.01) ***H01M 4/62*** (2006.01)
***H01M 10/06*** (2006.01) ***H01M 10/08*** (2006.01)
***H01M 2/16*** (2006.01) ***H01M 4/66*** (2006.01)
***H01M 4/68*** (2006.01) ***H01M 4/73*** (2006.01)
*H01M 4/02* (2006.01)

(86) International application number:
**PCT/JP2016/086436**

(87) International publication number:
**WO 2017/099144 (15.06.2017 Gazette 2017/24)**

(54) **LEAD STORAGE BATTERY**
BLEIAKKUMULATOR
ACCUMULATEUR AU PLOMB

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.12.2015 PCT/JP2015/084846**

(43) Date of publication of application:
**17.10.2018 Bulletin 2018/42**

(73) Proprietor: **Hitachi Chemical Co., Ltd.**
**Chiyoda-ku**
**Tokyo 100-6606 (JP)**

(72) Inventors:
- **KOBAYASHI Shinsuke**
**Tokyo 100-6606 (JP)**
- **MARUYAMA Kazuya**
**Tokyo 100-6606 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 280 443** **WO-A1-2011/142072**
**WO-A1-2012/043331** **WO-A1-2012/157311**
**WO-A1-2015/163287** **WO-A1-2015/163287**
**WO-A1-2016/114315** **WO-A1-2016/204049**
**JP-A- 2014 157 703** **JP-A- 2015 225 710**
**JP-B1- 5 587 523** **US-A1- 2012 070 714**
**US-A1- 2013 099 749** **US-A1- 2015 200 424**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 389 131 B1

## Description

### Technical Field

The present disclosure relates to a lead storage battery.

### Background Art

Lead storage batteries are widely used for industrial and consumer applications, and the like, because they are excellent in reliability and are inexpensive. In particular, there have been many demands for use as vehicle batteries (so-called "batteries"). In recent years, as efforts to protect the environment and improve fuel cost, development of an idling stop system vehicle (hereinafter referred to as an "ISS vehicle") which stops an engine during temporary stopping of a vehicle and re-starts the engine upon starting has been accelerated.

Lead storage batteries installed in ISS vehicles are mainly used in a state in which they are not completely charged, namely, a partial state of charge (PSOC) due to the following circumstances peculiar to ISS vehicles. In other words, engine starting and engine stopping are repeated frequently in ISS vehicles. Since a large electric current discharge is needed in starting an engine, the number of discharges increases as a necessity. In addition, when ISS vehicles are temporarily stopping, an alternator that uses the engine as a power source also stops. Therefore, charging of the lead storage battery cannot be carried out. Since electric power supply to electric components (for example, an air-conditioner) is needed even during temporary stop, discharge load is increased.

Use of a lead storage battery in a PSOC state causes a problem of "phenomenon of thinning of an ear portion" which has not occurred in a conventional situation in which a lead storage battery is used in a fully charged state. This is a phenomenon in which an ear portion (a current-collecting portion) of a negative electrode current collector is used for discharge reaction, or the like, and thereby thickness of the ear portion is decreased over time. When the phenomenon of thinning of an ear portion occurs, the resistance of the ear portion is increased, thus deteriorating the performance of the lead storage battery (for example, charge and discharge characteristics and cycle life). When the phenomenon of thinning of the ear portion further proceeds, the ear portion is ruptured. As a result, output is suddenly unable to be obtained from the lead storage battery. Such a life mode is also called "sudden life" and this should be avoided particularly in batteries for vehicles.

From the viewpoint of suppressing the phenomenon of thinning of an ear portion of a negative electrode, JP 4515902 B discloses a technology using a Pb-Ca alloy grid plate containing 0.6 to 2.0% by mass of Sn (tin) as a negative electrode grid plate, and using dilute sulfuric acid containing 2 to 50 g/L of Al (aluminum) in terms of sulfate as electrolytic solution.

US 2015/200424 A1 discloses that, in a lead-acid battery including an electrode plate group housed in a cell chamber with an electrolyte, each positive electrode plate includes a positive electrode grid made of lead or a lead alloy containing no antimony, and a positive electrode active material with which the positive electrode grid is filled. Each negative electrode plate includes a negative electrode grid made of lead or a lead alloy containing no antimony, a surface layer formed on a surface of the negative electrode grid and made of a lead alloy containing antimony, and a negative electrode active material with which the negative electrode grid is filled.

## Summary of Invention

### Technical Problem

Technology of Patent Literature 1 can suppress thinning of an ear portion in a negative electrode current collector. Therefore, it is considered that the sudden life due to rupture of the ear portion can be delayed. However, in lead storage batteries used in ISS vehicles, generation control vehicles, and the like, further longer life is required. From such a viewpoint, the technology of Patent Literature 1 still had room for improvement.

An object of the present disclosure is to provide a lead storage battery that can be used for a sufficiently long period of time even if the battery is mainly used in a partial state of charge (PSOC state).

### Solution to Problem

The present invention relates to the lead storage battery of independent claim 1.

A lead storage battery satisfying the conditions of the present invention can be used for a sufficiently long period of time even if it is mainly used in a PSOC state. In particular, when the ratio p1/n1 of the mass p1 of the positive electrode material to the mass n1 of the negative electrode material is 1.35 or more, lead sulfate generated in the negative electrode ear portion is easily reduced to metallic lead. Therefore, it is possible to sufficiently suppress the decrease in thickness

of the negative electrode ear portion over time (thinning of the ear portion). Consequently, it is possible to sufficiently prevent the occurrence of a situation in which the ear portion is ruptured and therefore output from the lead storage battery is suddenly stopped. Note here that the index of the life performance of a lead storage battery mainly used in the PSOC state includes "ISS cycle characteristics." This can be evaluated by the cycle test that simulates the use of a lead storage battery in an ISS vehicle.

From the viewpoint of further improving the ISS cycle characteristics of the lead storage battery, in addition to the above-mentioned configuration, one or a plurality of configurations selected from the following configurations may be employed.

(1) A negative electrode material further contains a resin including a sulfone group and/or a sulfonate group. This contributes to the improvement of the ISS cycle characteristics. The resin including a sulfone group and/or a sulfonate group may be a bisphenol-based resin. The bisphenol-based resin may be a condensate of bisphenol, aminobenzenesulfonic acid, and formaldehyde.
(2) The electrolytic solution includes an aluminum ion. This contributes to the improvement of charge acceptance and performance with respect to decrease of electrolytic solution (performance of suppressing the decrease of an electrolytic solution), in addition to the improvement of the ISS cycle characteristics. The concentration of aluminum ions may be 0.02 to 0.14 mol/L.
(3) The electrode plate group includes a non-woven fabric between the negative electrode plate and the separator. The negative electrode plate and the non-woven fabric come into contact with each other. This contributes to improvement of performance with respect to decrease of electrolytic solution, in addition to the improvement of the ISS cycle characteristics. The non-woven fabric may be at least one fiber selected from a group consisting of a glass fiber, a polyolefin fiber, and a fiber made from pulp.
(4) The positive electrode material has a specific surface area of 4 $m^2/g$ or more. This contributes to improvement of charge acceptance in addition to the improvement of the ISS cycle characteristics.
(5) The electrolytic solution has a specific gravity of 1.25 to 1.29. This contributes to improvement of charge acceptance in addition to the improvement of the ISS cycle characteristics. Furthermore, this brings effects of suppressing penetration short circuit and freezing, as well as an effect of improving the discharge characteristics.
(6) D1/A1 is 0.85 or more, wherein D1 represents a thickness of the electrode plate group, A1 represents an inner dimension of the cell chamber in a stacking direction of the electrode plate group.
(7) The negative electrode material has a specific surface area of 0.4 $m^2/g$ or more. This contributes to the improvement of discharge characteristics in addition to the improvement of the ISS cycle characteristics.
(8) The content of a positive electrode active material contained in the positive electrode material is 95% by mass or more with respect to the mass p1 of the positive electrode material, and the content of a negative electrode active material contained in the negative electrode material is 93% by mass or more with respect to the mass n1 of the positive electrode material. This also contributes to the improvement of the low-temperature high-rate discharge performance and the charge acceptance, in addition to the improvement of the ISS cycle characteristics.

From the viewpoint of further improving the charge acceptance of the lead storage battery, the negative electrode material may further contain a carbonaceous material. The carbonaceous material may be Ketjen black or scaly graphite. Furthermore, the separator may include a rib, and a base portion that supports the rib. The base portion may have a thickness of 0.3 mm or less, and the rib may have a height of 0.6 mm or less.

## Advantageous Effects of Invention

The present disclosure provides a lead storage battery capable of being used for a sufficiently long period of time even if it is mainly used in a partial state of charge (PSOC state).

## Brief Description of Drawings

FIG. 1 is a perspective view showing a lead storage battery in accordance with an embodiment.
FIG. 2 is a view showing an inside structure of the lead storage battery shown in FIG. 1.
FIG. 3 is a perspective view showing one example of an electrode plate group.
FIG 4 is a front view showing an electrode plate (a positive electrode plate or a negative electrode plate).
FIG 5(a) is a sectional view showing a positive electrode plate taken on line V-V in FIG 4; and FIG. 5(b) is a sectional view showing a negative electrode plate taken on line V-V in FIG. 4.
FIGs. 6(a) and 6(b) are front views of one example of a current collector (a positive electrode current collector or a

negative electrode current collector).

FIG. 7 is a view showing a bag-shaped separator and an electrode to be accommodated in the bag-shaped separator.

FIG. 8(a) is a view showing one example of a separator, and FIG. 8(b) is a sectional view taken on line Ib-Ib of FIG 8(a).

FIG 9 is a sectional view showing one example of an arrangement of a separator and electrode plates.

FIG 10 is a perspective view showing one example of a battery case.

FIG. 11 is a sectional view taken on line XI-XI of FIG 10.

**Description of Embodiments**

The term "layer" in the present specification encompasses not only the configuration of a shape formed on the entire surface, but also the configuration of a shape formed on a part of the surface, when the layer is observed in a plan view. In the present specification, the numerical range expressed by using "to" refers to the range including the numeric values before and after "to" as the minimum value and the maximum value, respectively. In the numerical ranges described stepwise in the present specification, the upper or lower limit of the numerical range of a certain stage may be replaced with the upper or lower limit of the numerical range of another stage. In the numerical ranges described in the present specification, the upper or lower limits of the numerical ranges thereof may be replaced with values described in Examples. "A or B" may contain any one of A and B, and may contain both A and B. The materials which are exemplified in the present specification can be used singly, or in combination of two or more thereof, unless otherwise specifically noted. In the present specification, when a plurality of substances exist corresponding to each component in a composition, the content of each of the components in the composition means the total amount of the plurality of substances which exist in the composition, unless otherwise specifically noted. Since the specific gravity varies depending on temperatures, in the present specification, the specific gravity is defined as one converted at 20 °C.

Hereinafter, a lead storage battery according to the present disclosure will be described with reference to drawings. Note here that in all the drawings, the same reference signs will be given to the same or corresponding components.

<Lead storage battery>

A lead storage battery in accordance with this embodiment includes a battery case having a cell chamber; an electrode plate group being provided in the cell chamber, and including a separator, and a positive electrode plate and a negative electrode plate that are alternately stacked with the separator disposed therebetween; and an electrolytic solution accommodated in the cell chamber. The positive electrode plate and the negative electrode plate respectively include an electrode material filled portion made of electrode materials (a positive electrode material and a negative electrode material), a current collector that supports an electrode material filled portion, and an ear portion provided on an upper peripheral portion of the current collector. The electrode material contains, for example, an electrode active material. The ear portion is provided, for example, in such a manner that it protrudes upward from the upper peripheral portion of the current collector. When S1 represents a total surface area of the electrode material filled portions and V1 represents an apparent total volume of the electrode material filled portions, S1/V1 is 8.9 $cm^{-1}$ or more. When p1 represents a mass of the positive electrode material and n1 represents a mass of the negative electrode material, p1/n1 is 1.35 or more.

This lead storage battery can be applied to various types of lead storage batteries, that is, liquid lead storage batteries, valve regulated lead storage batteries, sealed lead storage batteries, and the like. Among them, from the viewpoint of manufacturing cost, and the like, a liquid lead storage battery is preferable. Note here that in this embodiment, the electrode material indicates an electrode material after formation (for example, in a fully charged state). In an unformed stage, materials corresponding to the electrode material contain materials to become an electrode material by formation.

FIG. 1 is a perspective view of a lead storage battery (liquid lead storage battery) in accordance with this embodiment. FIG. 2 is a view showing an inside structure of the lead storage battery 1. As shown in these drawings, the lead storage battery 1 includes a battery case 2 which has an opening on the upper surface thereof and in which a plurality of an electrode plate groups 11 are stored, and a lid 3 for closing the opening of the battery case 2. The lid 3 is made of, for example, polypropylene, and includes a positive electrode terminal 4, a negative electrode terminal 5, and liquid port plugs 6 for blocking injection ports provided in the lid 3. The battery case 2 houses an electrolytic solution (not shown).

<Electrode plate group>

An electrode plate group includes a separator and a positive electrode plate and a negative electrode plate that are alternately stacked with the separator disposed therebetween. As shown in FIGs. 2 and 3, the electrode plate group 11 includes, for example, a positive electrode plate 12, a negative electrode plate 13, a bag-shaped separator

14, a positive electrode-side strap 15, a negative electrode-side strap 16, an inter-cell connection portion 17 or an electrode pole 18.

FIG. 4 is a front view showing an electrode plate (a positive electrode plate or a negative electrode plate). FIG. 5 is a sectional view taken on line V-V of FIG. 4. FIG. 5(a) shows a cross-section of the positive electrode plate, and FIG. 5(b) shows a cross-section of the negative electrode plate. FIGs. 6 are front views of one example of a current collector (a positive electrode current collector or a negative electrode current collector). In FIGs. 4 and 6, reference signs within parentheses show the configuration of a negative electrode plate.

The number of the positive electrode plates 12 and the negative electrode plates 13 in the electrode plate group 11 may be, for example, seven positive electrode plates and eight negative electrode plates, eight positive electrode plates and eight negative electrode plates, or eight positive electrode plates and nine negative electrode plates. The more the numbers of the positive electrode plates and the negative electrode plates become, the more the ISS cycle characteristics are improved.

(Positive electrode plate)

As shown in FIGs. 4, 5(a) and 6, the positive electrode plate 12 includes a positive electrode current collector 21 and a positive electrode material 23 filled into the positive electrode current collector 21. The positive electrode material 23 forms a positive electrode material filled portion 24. The positive electrode current collector 21 has a positive electrode current-collecting portion (positive electrode ear portion) 22.

In the positive electrode plate 12, a portion filled with the positive electrode material 23 is the positive electrode material filled portion 24 (a sand-like hatching portion in FIG 4). Note here that the positive electrode material filled portion 24 is formed on the front and rear surfaces of the positive electrode plate 12. Usually, the entire surface of the positive electrode current collector 21 (the entire surface of the positive electrode material support portion mentioned later) is filled with the positive electrode material 23. However, the entire surface of the positive electrode current collector 21 is not necessarily filled with the positive electrode material 23. In other words, a portion that is not filled with the positive electrode material 23 may be included in a part of the positive electrode current collector 21. In this case, in the positive electrode current collector 21, only a portion filled with the positive electrode material 23 becomes the positive electrode material filled portion 24, and a portion that is not filled with the positive electrode material 23 in the positive electrode current collector 21 is excluded from the positive electrode material filled portion 24.

(Positive electrode current collector)

A positive electrode current collector 21 includes a positive electrode material support portion 21a, an upper frame portion (upper peripheral portion) 21b formed in a belt-shape on the upper side of the positive electrode material support portion 21a, and a positive electrode current-collecting portion (positive electrode ear portion) 22 provided on the upper frame portion 21b. The positive electrode current-collecting portion 22 is provided so as, for example, to partially protrude upward from the upper frame portion 21b. The outer shape of the positive electrode material support portion 21a is, for example, rectangular (rectangular or square), and formed in a grid shape. The positive electrode material support portion 21a may have a shape whose corners at the lower portion are cut off as shown in FIG. 6(b). The positive electrode current collector 21 constitutes a conduction path of an electric current from the positive electrode material 23.

A width W2 of the positive electrode current collector 21 is, for example, 10.0 to 16.0 cm. A height H2 of the positive electrode current collector 21 is, for example, 10.0 to 12.0 cm. A thickness of the positive electrode current collector 21 is, for example, 0.6 to 1.1 mm. Note here that when the positive electrode material support portion 21a has a shape whose corners at the lower portion are cut off, W2 and H2 are calculated assuming that the corners at the lower portion are present (see FIG. 6(b)).

Examples of the composition of the positive electrode current collector 21 include a lead-calcium-tin alloy, a lead-calcium alloy and a lead-antimony alloy. These lead alloys are formed into a grid shape by a gravity casting method, an expansion method, a punching method, or the like, to obtain the positive electrode current collector 21. Note here that the positive electrode current collector 21 shown in FIG. 6 is an expanded grid body.

(Positive electrode material)

[Positive electrode active material]

The positive electrode material 23 contains, for example, a positive electrode active material. The positive electrode material 23 is obtained by aging and drying, for example, a positive electrode material paste including a material to be formed into a positive electrode active material by formation (a raw material of the positive electrode active material),

followed by formation. Examples of the positive electrode active material include β-lead dioxide (β-$PbO_2$) and α-lead dioxide (α-$PbO_2$). One of them may be included in the positive electrode material 23, or both of them may be included in the positive electrode material 23. The raw material of the positive electrode active material is not particularly limited, and examples thereof include lead powder. Examples of the lead powder include lead powder which is produced by a ball mill type lead powder producing machine or a Burton-pot type lead powder producing machine (a mixture of a main component PbO powder and scaly metallic lead, in the ball mill type lead powder producing machine). As the raw material of the positive electrode active material, red lead ($Pb_3O_4$) may be used. For example, the positive electrode material paste is only required to contain tribasic lead sulfate (a raw material of a positive electrode active material) as a main component.

From the viewpoint that the low-temperature high-rate discharge performance is excellent and the charge acceptance is excellent, and that the ISS cycle characteristics have further excellence, the content of the positive electrode active material (on the basis of the total mass of the positive electrode material 23) is preferably, for example, 95% by mass or more, and may be 97% by mass or more or 99% by mass or more. The upper limit of the content of the positive electrode active material may be, for example, 100% by mass. In other words, the positive electrode material 23 may be substantially made of positive electrode active material. Note here that the content of the positive electrode active material used herein represents the amount of the positive electrode active material (which has been subjected to formation) included in the positive electrode material 23 (which has been subjected to formation).

[Positive electrode additives]

The positive electrode material 23 may further contain additives. Examples of the additives include a carbonaceous material (a carbonaceous electrically conductive material), short fiber for reinforcement, and the like. Examples of the carbonaceous material include carbon black, graphite, and the like. Examples of the carbon black include furnace black (Ketjen black etc.), channel black, acetylene black, thermal black, and the like. Examples of the short fiber for reinforcement include acrylic fiber, polyethylene fiber, polypropylene fiber, polyethylene terephthalate fiber, carbon fiber, and the like. Note here that the carbon fiber exemplified as the short fiber for reinforcement may be added to the positive electrode material as the carbonaceous material (carbonaceous electrically conductive material).

[Physical properties of positive electrode material]

The lower limit of the specific surface area of the positive electrode material 23 is, for example, 3 $m^2/g$, and may be 4$m^2/g$ or 5 $m^2/g$ from the viewpoint of being excellent in charge acceptance and having further excellence in ISS cycle characteristics. The upper limit of the specific surface area of the positive electrode material 23 is not particularly limited, but from a practical viewpoint and from the viewpoint of an excellent utilization rate, the upper limit is, for example, 15 $m^2/g$, and may be 12 $m^2/g$ or 7 $m^2/g$. From these viewpoints, the specific surface area of the positive electrode material 23 is, for example, 3 to 15 $m^2/g$, and may be 4 to 12 $m^2/g$ or 5 to 7 $m^2/g$. Note here that the specific surface area of the positive electrode material 23 herein represents the specific surface area of the positive electrode material 23 (after formation). The specific surface area of the positive electrode material 23 can be adjusted by, for example, a method for adjusting the additive amount of sulfuric acid and water when the positive electrode material paste is produced, a method for making the raw material of the active material be fine in an unformed stage, or a method for changing the formation conditions. It is not clear why the above-mentioned range of the specific surface area of the positive electrode material 23 achieves more excellent ISS cycle characteristics. However, the present inventors suppose as follows. In other words, the above-mentioned range of the specific surface area of the positive electrode material 23 contributes to keeping the state of charge (SOC) of the lead storage battery 1 relatively high. Thus, a negative electrode active material can be sufficiently reduced easily. Therefore, a negative electrode current-collecting portion (negative electrode ear portion) 32 may not easily become lead sulfate. As a result, it is supposed that the deterioration of the negative electrode current-collecting portion 32 (thinning of an ear portion) can be suppressed, thus achieving more excellent ISS cycle characteristics.

The specific surface area of the positive electrode material 23 can be measured by, for example, a BET method. The BET method is a general measurement technique for measuring specific surface area in which one inert gas whose molecular size is known (for example, nitrogen gas) is adsorbed on the surface of the test sample to be measured, and surface area is calculated from the adsorption amount and the occupied area of the inert gas. Specifically, measurement is carried out based on the following BET formula.

The following relation formula (1) is well established when $P/P_o$ is in a range of 0.05 to 0.35. Note here that in formula (1), the details of the reference signs are as follows:

P: adsorption equilibrium pressure at a constant temperature and in an adsorption equilibrium state;
$P_o$: saturated vapor pressure at adsorption temperature

V: adsorption amount at adsorption equilibrium pressure P

$V_m$: monolayer adsorption amount (the adsorption amount when gas molecules have formed a monolayer on a solid surface)

C: BET constant (a parameter related to the interaction between the solid surface and the adsorptive substance)

$$\frac{P}{V(P_0 - P)} = \left(\frac{C-1}{V_m C}\right)\left(\frac{P}{P_0}\right) + \frac{1}{V_m C} \qquad \cdots(1)$$

Formula (1) is modified (the numerator and denominator of the left side are divided by P) to obtain the following formula (2). Gas molecules for which the adsorption occupied surface area is known are adsorbed on the test sample for the total specific surface area used in the measurement, and the relationship between the adsorbed amount (V) and the relative pressure ($P/P_o$) is measured. The left side of formula (2) and $P/P_0$ are plotted using the measured V and $P/P_o$. Here, when s represents the slope, the following formula (3) is derived from formula (2). When i represents the intercept, the intercept i and the slope s are expressed in the following formulae (4) and (5), respectively.

$$\frac{1}{V\left(\frac{P_0}{P} - 1\right)} = \left(\frac{C-1}{V_m C}\right)\left(\frac{P}{P_0}\right) + \frac{1}{V_m C} \qquad \cdots(2)$$

$$s = \frac{C-1}{V_m C} = \frac{C}{V_m C} - \frac{1}{V_m C} = \frac{1}{V_m} - \frac{1}{V_m C} \qquad \cdots(3)$$

$$i = \frac{1}{V_m C} \qquad \cdots(4)$$

$$s = \frac{1}{V_m} - i \qquad \cdots(5)$$

Formulae (4) and (5) are modified to obtain the following formulae (6) and (7), and the following formula (8) for calculating the monolayer adsorption amount $V_m$ is obtained. In other words, the adsorption amount V at a certain relative pressure $P/P_o$ is measured at several points, and the slope and intercept of the plotted line are calculated to obtain the monolayer adsorption amount $V_m$.

$$s \times V_m = 1 - i \times V_m \qquad \cdots(6)$$

$$(s + i)V_m = 1 \qquad \cdots(7)$$

$$V_m = \frac{1}{s + i} \qquad \cdots(8)$$

The total surface area $S_{total}$ ($m^2$) of a test sample is calculated from the following formula (9), and the specific surface area S ($m^2/g$) is calculated from the total surface area $S_{total}$ in the following formula (10). Note here that in formula (9), N represents Avogadro's number, $A_{CS}$ represents an adsorption cross-sectional area ($m^2$), and M represents a molecular weight. Furthermore, in formula (10), w represents an amount of the sample (g).

$$S_{total} = (V_m \times N \times A_{CS})M \quad \cdots (9)$$

$$S = \frac{S_{total}}{w} \quad \cdots (10)$$

(Negative electrode plate)

As shown in FIGs. 4, 5(b), and 6, the negative electrode plate 13 includes a negative electrode current collector 31, and a negative electrode material 33 filled in the negative electrode current collector 31. The negative electrode material 33 constitutes a negative electrode material filled portion 34. The negative electrode current collector 31 includes a negative electrode current-collecting portion (a negative electrode ear portion) 32.

Similar to the positive electrode plate 12, in in the negative electrode plate 13, a portion filled with negative electrode material 33 serves as the negative electrode material filled portion 34. The details of the negative electrode material filled portion 34 are the same as those of the positive electrode material filled portion 24.

(Negative electrode current collector)

The negative electrode current collector 31 includes a negative electrode material support portion 31a, an upper frame portion (upper peripheral portion) 31b formed in a belt-shape on the upper side of the negative electrode material support portion 31a, and a negative electrode current-collecting portion (a negative electrode ear portion) 32 provided on the upper frame portion 31b. The negative electrode current-collecting portion 32 is provided so as, for example, to partially protrude upward from the upper frame portion 31b. The outer shape of the negative electrode material support portion 31a is, for example, rectangular (rectangular or square), and formed in a grid shape. The negative electrode material support portion 31a may have a shape whose corners at the lower portion are cut off as shown in FIG 6(b). The negative electrode current collector 31 constitutes a conduction path to the negative electrode material 33.

The composition of the negative electrode current collector 31 may be similar to that of the positive electrode current collector 21. The negative electrode current collector 31 can be produced by the same method as in the positive electrode current collector 21.

From the viewpoint that the negative electrode current-collecting portion 32 is not easily ruptured, and that the ISS cycle characteristics have further excellence, the thickness d of the negative electrode current-collecting portion 32 is, for example, 0.6 mm or more, and may be 0.7 mm or more, 0.8 mm or more, 0.85 mm or more, 0.90 mm or more, 0.95 mm or more, or 1.0 mm or more. The thickness of the negative electrode current-collecting portion 32 may be, for example, 1.1 mm or less from the viewpoint of reducing the weight of the lead storage battery.

The width W2, height H2, and thickness of the negative electrode current collector 31 may be the same or not the same as those of the positive electrode current collector 21. Note here that when the negative electrode material support portion 31a has a shape whose corners at the lower portion are cut off, W2 and H2 are calculated assuming that the corners at the lower portion are present (see FIG 6(b)).

(Negative electrode material)

[Negative electrode active material]

The negative electrode material 33 contains, for example, a negative electrode active material. The negative electrode material 33 is obtained by aging and drying, for example, a negative electrode material paste including a material to be formed into a negative electrode active material by formation (a raw material of the negative electrode active material), followed by formation. Examples of the negative electrode active material include Spongylead and the like. The Spongylead tends to react with sulfuric acid in an electrolytic solution and gradually changes into lead sulfate ($PbSO_4$). Examples of the raw material of the negative electrode active material include lead powder and the like. Examples of the lead powder include lead powder which is produced by a ball mill type lead powder producing machine or a Burton-pot type lead powder producing machine (a mixture of a main component PbO powder and scaly metallic lead, in the ball mill type lead powder producing machine). The negative electrode material paste is made of, for example, basic lead sulfate and metallic lead as well as a lower oxide.

From the viewpoint that the low-temperature high-rate discharge performance is excellent and the charge acceptance is excellent, and that the ISS cycle characteristics have further excellence, the content of the negative electrode active material (on the basis of the total mass of the negative electrode material 33) is preferably, for example,

93% by mass or more, and may be 95% by mass or more or 98% by mass or more. The upper limit of the content of the negative electrode active material may be, for example, 100% by mass. In other words, the negative electrode material 33 may be substantially made of the negative electrode active material. Note here that the content of the negative electrode active material used herein represents the amount of the negative electrode active material (which has been subjected to formation) included in the negative electrode material 33 (which has been subjected to formation).

[Negative electrode additives]

The negative electrode material 33 may contain additives. Examples of the additives include (A) at least one resin selected from the group consisting of a sulfone group and a sulfonate group (a resin including a sulfone group and/or a sulfonate group), and (B) other additives.

[(A) Resin including sulfone group and/or sulfonate group]

Examples of the (A) resin including a sulfone group and/or a sulfonate group include bisphenol-based resin including a sulfone group and/or a sulfonate group (hereinafter, referred to as simply "bisphenol-based resin"), lignin sulfonic acid, lignin sulfonate, and the like. From the viewpoint that the charge acceptance is improved, for example, the resin may be a bisphenol-based resin. When the negative electrode material 33 contains bisphenol-based resin, excellent charge acceptance is achieved. Furthermore, in the lead storage battery 1 in accordance with this embodiment, the negative electrode material 33 contains a bisphenol-based resin, so that further excellent ISS cycle characteristics are achieved.

It is not clear why the ISS cycle characteristics become further excellent when the negative electrode material 33 contains bisphenol-based resin. In this point, the present inventors suppose as follows. In other words, a bisphenol-based resin included in the negative electrode material 33 contributes to keeping the state of charge (SOC) of the lead storage battery 1 relatively high. Thus, the negative electrode current-collecting portion 32 is not easily converted into lead sulfate. As a result, it is supposed that the deterioration of the negative electrode current-collecting portion 32 (thinning of an ear portion) can be suppressed, thus achieving further excellent ISS cycle characteristics.

As the bisphenol-based resin, bisphenol-based resin that is a condensate of a bisphenol-based compound, at least one selected from the group consisting of aminoalkylsulfonic acid, aminoalkylsulfonic acid derivatives, aminoaryl sulfonic acid, and aminoaryl sulfonic acid derivatives, and at least one selected from the group consisting of formaldehyde and formaldehyde derivatives.

The bisphenol-based resin preferably includes, for example, at least one of a structural unit represented by the following general formula (II) and a structural unit represented by the following general formula (III).

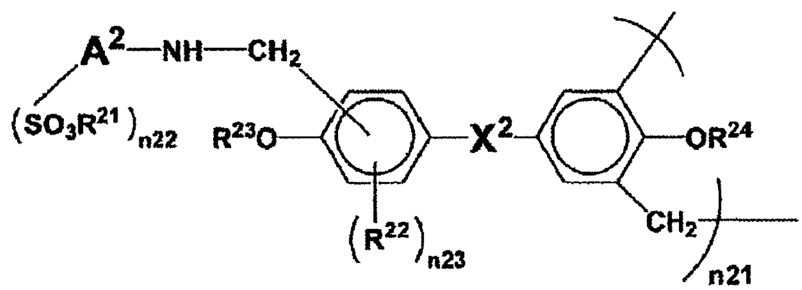

…(II)

[In formula (II), $X^2$ represents a divalent group; $A^2$ represents an alkylene group having 1 to 4 carbon atoms, or an arylene group; $R^{21}$, $R^{23}$ and $R^{24}$ each independently represent an alkali metal or a hydrogen atom; $R^{22}$ represents a methylol group ($-CH_2OH$); n21 represents an integer of 1 to 150; n22 represents an integer of 1 to 3; and n23 represents 0 or 1. Furthermore, a hydrogen atom directly bonded to a carbon atom constituting a benzene ring may be substituted with an alkyl group having 1 to 5 carbon atoms.]

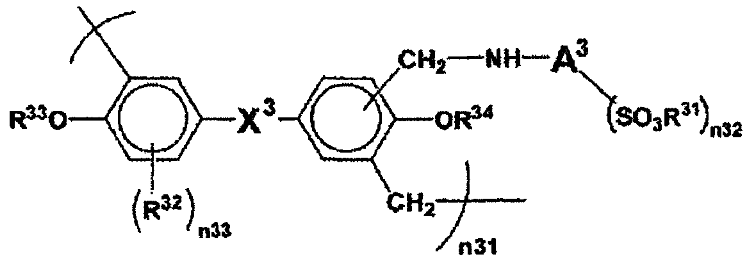
···(III)

[In formula (III), $X^3$ represents a divalent group; $A^3$ represents an alkylene group having 1 to 4 carbon atoms, or an arylene group; $R^{31}$, $R^{33}$ and $R^{34}$ each independently represent an alkali metal or a hydrogen atom; $R^{32}$ represents a methylol group ($-CH_2OH$); n31 represents an integer of 1 to 150; n32 represents an integer of 1 to 3; and n33 represents 0 or 1. Furthermore, a hydrogen atom directly bonded to a carbon atom constituting a benzene ring may be substituted with an alkyl group having 1 to 5 carbon atoms.]

The ratio of a structural unit represented by formula (II) to a structural unit represented by formula (III) is not particularly limited, and may vary dependent upon synthesis conditions and the like. As the bisphenol-based resin, resin including only one of the structural unit represented by formula (II) and the structural unit represented by formula (III) may be used.

Examples of $X^2$ and $X^3$ may include organic groups such as an alkylidene group (a methylidene group, an ethylidene group, an isopropylidene group, a sec-butylidene group, etc.), a cycloalkylidene group (a cyclohexylidene group etc.), a phenyl alkylidene group (a diphenyl methylidene group, a phenyl ethylidene group etc.); or a sulphonyl group. From the viewpoint of excellent charge acceptance, they may be an isopropylidene group ($-C(CH_3)_2-$). From the viewpoint of excellent discharge characteristics, they may be a sulfonyl group ($-SO_2-$). $X^2$ and $X^3$ may be substituted with a halogen atom such as a fluorine atom. When $X^2$ and $X^3$ are a cycloalkylidene group, the hydrocarbon ring may be substituted with an alkyl group or the like.

Examples of $A^2$ and $A^3$ include an alkylene group having 1 to 4 carbon atoms, such as a methylene group, an ethylene group, a propylene group, or a butylene group; and a divalent arylene group such as a phenylene group or a naphthylene group. The arylene group may be substituted with an alkyl group or the like.

Examples of the alkali metal of $R^{21}$, $R^{23}$, $R^{24}$, $R^{31}$, $R^{33}$ and $R^{34}$ include sodium, potassium, and the like. From the viewpoints of having further excellence in ISS cycle characteristics and having excellent solubility in a solvent, for example, n21 and n31 are 1 to 150, and may be 10 to 150. From the viewpoint that the ISS cycle characteristics, the discharge characteristics, and the charge acceptance are easily improved in a good balance, n22 and n32 are, for example, 1 or 2. n23 and n33 vary depending on manufacturing conditions, but from the viewpoints of having further excellence in the ISS cycle characteristics and having excellent storage stability in the bisphenol-based resin, they are, for example, 0.

Examples of lignin sulfonate as component (A) include alkali metal salts in which a hydrogen atom of a sulfone group ($-SO_3H$) in lignin sulfonic acid is substituted with an alkali metal. Examples of the alkali metal salt include sodium salt, potassium salt, and the like.

The weight-average molecular weight of the (A) resin including a sulfone group and/or a sulfonate group may be, for example, 3000 or more, and may be 10000 or more, 20000 or more, or 30000 or more from the viewpoint that the ISS cycle characteristics are easily improved by suppressing elusion of the (A) resin including a sulfone group and/or a sulfonate group from the electrode of a lead storage battery. The weight-average molecular weight of the resin including a sulfone group and/or a sulfonate group may be, for example, 200000 or less, and may be 150000 or less, or 100000 or less from the viewpoint that the ISS cycle characteristics are easily improved by suppressing deterioration of the adsorption property with respect to the electrode active material and deterioration of distribution.

The weight-average molecular weight of the (A) resin including a sulfone group and/or a sulfonate group can be measured by, for example, gel permeation chromatography (hereinafter referred to as "GPC") in the below-mentioned conditions.

(GPC conditions)

Apparatus: High performance liquid chromatograph LC-2200 Plus (manufactured by JASCO Corporation)

Pump: PU-2080
Differential refractometer: RI-2031
Detector: Ultraviolet visible absorptiometer UV-2075 (λ: 254 nm)

Column oven: CO-2065
Column: TSKgel SuperAW (4000), TSKgel SuperAW (3000), TSKgel SuperAW (2500) (manufactured by Tosoh Corporation)
Column temperature: 40 °C
Eluent: Methanol solution containing LiBr (10 mmol/L) and triethylamine (200mmol/L)
Flow velocity: 0.6 mL/minute
Molecular weight standard sample: polyethylene glycol (molecular weight: $1.10\times10^6$, $5.80\times10^5$, $2.55\times10^5$, $1.46\times10^5$, $1.01\times10^5$, $4.49\times10^4$, $2.70\times10^4$, $2.10\times10^4$; manufactured by Tosoh Corporation), diethylene glycol (molecular weight: $1.06\times10^2$; manufactured by Kishida Chemical Co., Ltd.), and dibutylhydroxytoluene (molecular weight: $2.20\times10^2$; manufactured by Kishida Chemical Co., Ltd.)

[(B) Other additives]

The negative electrode material 33 may contain (B) other additives. Examples of the (B) other additives include barium sulfate, carbonaceous material (carbonaceous electrically conductive material), short fiber for reinforcement, and the like. In this embodiment, these additives may be used as necessary. The negative electrode material 33 may not include, for example, carbonaceous material. However, from the viewpoint of improving the charge acceptance and further improving the ISS cycle characteristics, the negative electrode material 33 may contain carbonaceous material as the additives. Note here that the carbon fiber exemplified as the short fiber for reinforcement may be added to the negative electrode material as the carbonaceous material (carbonaceous electrically conductive material).

[Carbonaceous material]

Examples of the carbonaceous material (carbonaceous electrically conductive material) include graphite, carbon black, activated carbon, carbon nanotube, and the like. Examples of the carbon black include furnace black (Ketjen black etc.), acetylene black, and the like. From the viewpoint of improving the charge acceptance, the carbon black may be Ketjen black. From the viewpoint of further improving the ISS cycle characteristics, the carbon black may be graphite. From the viewpoint of particularly improving the ISS cycle characteristics, the carbon black may be scaly graphite. When scaly graphite is used, balance of the charge performance, the ISS cycle characteristics, and the low-temperature high-rate discharge performance is also excellent.

The average primary particle diameter of scaly graphite is, for example, 100 to 500 μm, and may be 100 to 350 μm or 100 to 220 μm, from the viewpoint of further improving the ISS cycle characteristics. Herein, the average primary particle diameter of scaly graphite is determined in compliance with the laser diffraction-scattering method described in JIS M8511 (2005). Specifically, a laser diffraction-scattering particle size distribution analyzer (Micro Track 9220FRA manufactured by Nikkiso Co.) is used, an appropriate amount of a scaly graphite sample is loaded in an aqueous solution including 0.5 vol% of polyoxyalkylene octyl phenyl ether (for example , Triton X-100 manufactured by Roche Diagnostics K.K.) being a commercially available surface active agent serving as a dispersant, an ultrasonic wave of 40 W is applied for 180 seconds while being stirred, and then the average particle size is measured. The value of the determined average particle size (the median diameter: D50) is defined as the average primary particle diameter.

Preferably, the content of the carbonaceous material ranges from 0.1 to 3 parts by mass with respect to 100 parts by mass of the negative active material (spongiform metal lead) after formation.

[Short fiber for reinforcement]

Examples of the short fiber for reinforcement include acrylic fiber, polyethylene fiber, polypropylene fiber, polyethylene terephthalate fiber, carbon fiber, and the like.

[Physical properties of negative electrode material]

The specific surface area of the negative electrode material 33 is, for example, 0.4 $m^2/g$ or more, and may be 0.5 $m^2/g$ or more or 0.6 $m^2/g$ or more, from the viewpoints of being excellent in discharge characteristics and having further excellence in the ISS cycle characteristics. The specific surface area of the negative electrode material 33 is, for example, 2 $m^2/g$ or less, and may be 1.8 $m^2/g$ or less or 1.5 $m^2/g$ or less, from the viewpoint of suppressing the contraction of the negative electrode plate 13 during a cycle. From these viewpoints, the specific surface area of the negative electrode material 33 is, for example, 0.4 to 2 $m^2/g$, and may be 0.5 to 1.8 $m^2/g$, or 0.6 to 1.5 $m^2/g$. Note here that the specific surface area of the negative electrode material 33 herein represents the specific surface area of the negative electrode material 33 (after formation). The specific surface area of the negative electrode material 33 can be adjusted by, for example, a method of adjusting the additive amount of sulfuric acid and water in producing a negative electrode material paste, a method of making the active material finer in an unformed stage, a method of changing the formation conditions, or the like. The specific surface area of the negative electrode material 33 can be measured by, for example,

a BET method.

(Ratio p1/n1 of mass p1 of positive electrode material to mass n1 of negative electrode material)

The ratio p1/n1 of the mass p1 of the positive electrode material 23 to the mass n1 of the negative electrode material 33 is 1.35 or more, and may be 1.40 or more, or 1.45 or more from the viewpoint of having further excellence in the ISS cycle characteristics. The mass ratio p1/n1 may be, for example, 1.60 or less, 1.55 or less, or 1.50 or less from the viewpoint that sufficient battery capacity is easily obtained and from a practical viewpoint. The mass ratio p1/n1 is, for example, 1.35 to 1.60, may be 1.40 to 1.60 or 1.45 to 1.60, and may be 1.35 to 1.55, 1.40 to 1.55, 1.45 to 1.55, 1.35 to 1.50, 1.40 to 1.50, or 1.45 to 1.50, from the viewpoint that sufficient battery capacity is easily obtained and from the viewpoint of being excellent in the ISS cycle characteristics. Note here that the mass p1 of the positive electrode material 23 and the mass n1 of negative electrode material 33 herein represent the mass of the positive electrode material 23 (after formation) and the mass of the negative electrode material 33 (after formation), respectively.

It is not clear why further excellent ISS cycle characteristics can be achieved when the mass ratio p1/n1 is in the above-mentioned range, but, as to this point, the present inventors suppose as follows. In other words, when the mass ratio p1/n1 is in the above-mentioned range, the negative electrode active material is sufficiently reduced easily, whereby the state of charge (SOC) of the lead storage battery easily shifts in a relatively high range. As a result, the negative electrode current-collecting portion 32 is not easily converted into lead sulfate. It is supposed that this is a cause for achieving more excellent ISS cycle characteristics.

The mass p1 of the positive electrode material 23 and the mass n1 of negative electrode material 33 are values obtained by subtracting the total mass of the grid body from the total mass of the electrode plate. In other words, when the mass of the positive electrode material 23 of each positive electrode plate 12 in the electrode plate group 11 is equal, the mass p1 of the positive electrode material 23 is a value obtained by multiplying the mass of the positive electrode material in one positive electrode plate 12 by the number of positive electrode plates 12 constituting the electrode plate group 11. Furthermore, when the mass of the negative electrode material 33 of each negative electrode plate 13 in the electrode plate group 11 is equal, the mass n1 of the negative electrode material 33 is a value obtained by multiplying the mass of the negative electrode material in one negative electrode plate 13 by the number of negative electrode plates 13 constituting the electrode plate group 11. When p1/n1 is calculated, the positive electrode plate and the negative electrode plate, which have been subjected to formation and then dried by the following procedure, are used. Firstly, the positive electrode plate and the negative electrode plate after formation were separated one by one from the electrode plate group. The positive electrode plate after formation was dried in an air atmosphere at 60 °C for 16 hours. Then, the negative electrode plate after formation was dried in a nitrogen atmosphere at 60 °C for 16 hours.

(Total surface area S1 and apparent total volume V1 of electrode material filled portion)

The total surface area of the electrode material filled portion (the total surface area of the positive electrode material filled portion 24 and the negative electrode material filled portion 34) S1 is a sum of the surface areas of unit cells as minimum units of the lead storage battery 1, that is, portions contributing to generation of electric power in the positive electrode plate 12 and the negative electrode plate 13 of the electrode plate group 11 to be inserted into one cell chamber. In other words, when the total surface areas of the front and rear surfaces in each electrode plate in the electrode plate group 11 are equal, the total surface area S1 of the electrode material filled portion is a value obtained by multiplying the sum of the surface areas of the front and rear surfaces of the electrode plate by the number of electrode plates (the positive electrode plates 12 and the negative electrode plates 13) constituting the electrode plate group 11. Specifically, as shown in FIG. 4, when the width of the electrode material filled portion is represented by a filled portion width W1, the height of the electrode material filled portion is represented by a filled portion height HI, and the number of the electrode plates in the electrode plate group 11 is represented by the number of electrode plates N1, the total surface area S1 is represented by the following formula (a).

$$\text{Total surface area S1} = (\text{filled portion width W1} \times \text{filled portion height H1}) \times 2 \times \text{number of electrode plates N1} \quad \ldots \text{(a)}$$

Note here that when the filled portion width W1 and the filled portion height HI are different in a plurality of electrode plates, the filled portion width W1 and filled portion height HI in the above-mentioned formula (a) may be average values of the filled portion widths W1 and filled portion heights HI in the plurality of electrode plates. Furthermore, when the electrode material support portions (the positive electrode material support portion 21a and the negative electrode material support portion 31a) have a shape whose corners at the lower portion are cut off, W1 and H1 are calculated

assuming that the corners at the lower portion are present. The total surface area S1 in the lead storage battery after formation can be measured in a state in which the electrode plate group is taken out from the battery case.

The total surface area S1 of the electrode material filled portion can be adjusted by, for example, changing the filled portion width W1, the filled portion height HI, or the number of electrode plates N1.

The apparent total volume of the electrode material filled portion (the apparent total volume of the positive electrode material filled portion 24 and the negative electrode material filled portion 34) VI is an apparent total volume of unit cells as minimum units of the lead storage battery 1, that is, portions contributing to generation of electric power in the electrode plate group 11 to be inserted into one cell chamber. In other words, the apparent total volume is a volume of a region surrounded by the positive electrode material filled portion 24 and the negative electrode material filled portion 34, and is an apparent volume including the gap between the adjacent positive electrode material filled portion 24 and negative electrode material filled portion 34. A portion between the adjacent positive electrode material filled portion 24 and negative electrode material filled portion 34 is space which does not include the electrode material filled portion, and the volume of a region including this space that does not include the electrode material filled portion is the apparent total volume VI. Specifically, as shown in FIGs. 3 and 4, if a thickness of the electrode plate group 11 in the stacking direction of the positive electrode plate 12 and the negative electrode plate 13 is represented by a thickness D1 of the electrode plate group, the apparent total volume VI is represented by the following formula (b).

$$\text{Apparent total volume V1} = \text{filled portion width W1} \times \text{filled portion height H1} \times \text{thickness D1 of electrode plate group} \ldots \text{(b)}$$

Note here that when the filled portion width W1 and the filled portion height H1 are different in a plurality of electrode plates, the filled portion width W1 and filled portion height H1 in the above-mentioned formula (b) may be average values of the filled portion widths W1 and filled portion heights H1 in the plurality of electrode plates. Furthermore, when the electrode material support portions (the positive electrode material support portion 21a and the negative electrode material support portion 31a) have a shape whose corners at the lower portion are cut off, W1 and H1 are calculated assuming that the corners at the lower portion are present. The apparent total volume V1 in the lead storage battery after formation can be measured in a state in which the electrode plate group is taken out from the battery case.

The thickness D1 of the electrode plate group is measured by the following method. The thickness D1 is measured within 10 mm from an interface between the upper frame portion of the electrode plate and the electrode material filled portion toward the lower frame portion of the electrode plate. In a case of a configuration in which a separator is disposed at the outermost side of the electrode plate group, the height of the rib of the separator is not included in the thickness of the electrode plate group. In other words, in a case of the configuration in which a separator is disposed at the outermost side of the electrode plate group, the thickness of the electrode plate group is measured at the position of a base portion 41 of the separator.

The apparent total volume VI of the electrode material filled portion can be adjusted by varying the filled portion width W1, the filled portion height HI, the thickness D1 of the electrode plate group, the number of electrode plates N1, a filling amount of the positive electrode material, a filling amount of the negative electrode material, a thickness of the current collector, a thickness of a separator, or the like. Note here that in the present specification, a thickness of an ear portion (a current-collecting portion) is defined as a thickness of a current collector.

The ratio of the total surface area S1 to the apparent total volume VI (S1/V1) is 8.9 $cm^{-1}$ or more. This gives the lead storage battery excellent ISS cycle characteristics. From the viewpoint of having further excellence in the ISS cycle characteristics, S1/V1 may be 9.5 $cm^{-1}$ or more or 10.1 $cm^{-1}$ or more. The upper limit of S1/V1 is not particularly limited, but practically in a lead storage battery, the upper limit is, for example, 12.5 $cm^{-1}$, an may be 11.9 $cm^{-1}$ or 11.3 $cm^{-1}$. From these viewpoints, S1/V1 may be, for example, 8.9 to 12.5 $cm^{-1}$, and may be 9.5 to 11.9 $cm^{-1}$ or 10.1 to 11.3 $cm^{-1}$.

Note here that when the filling amounts of the positive electrode material 23 and the negative electrode material 33 are adjusted, thicknesses of the positive electrode plate 12 and the negative electrode plate 13 can be varied. In other words, when the filling amount of the electrode material paste is increased, the thickness of the electrode plate is increased. When the filling amount of the electrode material paste is decreased, the thickness of the electrode plate is decreased. Therefore, by adjusting the filling amounts of the positive electrode material 23 and the negative electrode material 33, S1/V1 can be adjusted. Furthermore, S1/V1 can also be adjusted by adjusting thicknesses of the positive electrode current collector 21 and the negative electrode current collector 31, the thickness of the separator 14, the height of the rib in the separator, or the like.

<Electrolytic solution>

The electrolytic solution contains, for example, sulfuric acid. The electrolytic solution may further contain an

aluminum ion from the viewpoints of being excellent in the charge acceptance and having further excellence in the ISS cycle characteristics. The electrolytic solution containing an aluminum ion can be obtained by, for example, mixing sulfuric acid and aluminum sulfate (for example, aluminum sulfate powder) with each other. The aluminum sulfate to be dissolved in electrolytic solution can be added as an anhydride or a hydrate.

Incidentally, when a lead storage battery is over-charged, electrolysis, in which water in the electrolytic solution is decomposed into oxygen gas and hydrogen gas, is known to occur. When electrolysis occurs, gas generated by the electrolysis (oxygen gas and hydrogen gas) is exhausted to the outside of the system. Therefore, water content in the electrolytic solution decreases. As a result, the content of sulfuric acid in the electrolytic solution is increased, whereby reduction of the capacity due to corrosion deterioration of the positive electrode plate and the like proceeds. Furthermore, when the electrode plate is exposed from the electrolytic solution according to the reduction of the liquid level of the electrolytic solution, there may be a problem that the discharge capacity may be rapidly deteriorated, or that a connection part between the negative electrode plate and a strap or a strap itself may corrode. Even if the electrolytic solution decreases, the problem can be avoided by carrying out maintenance of supplying the battery case with water. However, from the viewpoint of reducing the frequency of maintenance, suppression of the reduction of water in the electrolytic solution is demanded. Furthermore, the findings of the present inventors have clarified that the electrolysis of the electrolytic solution occurs and the water content in the electrolytic solution decreases, even in a lead storage battery used in PSOC. The cause thereof is not necessarily clear. However, regarding this point, the present inventors suppose the main cause to be that even under PSOC, a section in which an active material is fully charged is locally present in the electrode, and the electrolysis of the electrolytic solution occurs in this section.

When the electrolytic solution further contains an aluminum ion, excellent charge acceptance is obtained and the ISS cycle characteristics become further excellent, and, in addition, the decrease of the electrolytic solution can be effectively suppressed.

The specific gravity of the electrolytic solution (for example, an electrolytic solution including an aluminum ion) may be in the below-mentioned range. The specific gravity of the electrolytic solution is, for example, 1.25 or more, and may be 1.28 or more, 1.285 or more, or 1.29 or more, from the viewpoint of suppressing penetration short circuit and freezing and from the viewpoint of excellent discharge characteristics (for example, from the viewpoint of being excellent in low-temperature high-rate discharge performance). The specific gravity of the electrolytic solution is, for example, 1.33 or less, and may be 1.32 or less, 1.315 or less, 1.31 or less, or 1.29 or less, from the viewpoints that the charge acceptance is improved and that the ISS cycle characteristics are further improved. From these viewpoints, the specific gravity of the electrolytic solution is, for example, 1.25 to 1.33, and may be 1.25 to 1.32, 1.25 to 1.315 or 1.25 to 1.29. The values of the specific gravity of the electrolytic solution can be measured by, for example, a buoyage-type densimeter, or a digital densimeter manufactured by Kyoto Electronics Manufacturing Co., Ltd.

The concentration of aluminum ions in the electrolytic solution (aluminum ion concentration) is, for example, 0.01 mol/L or more, and may be 0.02 mol/L or more or 0.05 mol/L or more, from the viewpoints that the charge acceptance is improved, that the performance with respect to decrease of electrolytic solution is excellent, and that the ISS cycle characteristics are further improved. The concentration of aluminum ions in the electrolytic solution may be 0.2 mol/L or less, 0.15 mol/L or less, 0.14 mol/L or less, or 0.13 mol/L or less, from the viewpoint of being excellent in the balance of the charge acceptance, the ISS cycle characteristics and the low-temperature high-rate discharge performance. From these viewpoints, the concentration of aluminum ions in the electrolytic solution is, for example, 0.01 to 0.2 mol/L, and may be 0.02 to 0.15 mol/L, 0.05 to 0.14 mol/L or 0.05 to 0.13 mol/L. The concentration of aluminum ions in the electrolytic solution can be measured by, for example, an ICP luminescent spectroscopic analysis method (inductively coupled plasma-optical emission spectrometry (ICP-OES)).

The details of the mechanism, in which the charge acceptance is improved when the concentration of aluminum ions in the electrolytic solution is in a predetermined range, are not clear. However, as to this point, the present inventors suppose as follows. In other words, it is supposed that when the aluminum ion concentration is in a predetermined range, in an arbitrary SOC state, since the solubility of crystalline lead sulfate as a discharged product into the electrolytic solution is increased, or since the diffusion property of the electrolytic solution into the electrode active material is improved by high ionic conductivity of the aluminum ions, the charge acceptance is improved.

The details of the mechanism, in which the performance with respect to decrease of electrolytic solution is excellent when the concentration of aluminum ions in the electrolytic solution is in a predetermined range, are not clear. However, regarding this point, the present inventors suppose as follows. When large-current charging is repeated whereby electrolysis occurs in water in the electrolytic solution, hydrogen gas is generated by a hydrogen ion existing in the vicinity of the negative electrode, and the hydrogen gas is exhausted to the outside of the battery. Consequently, water in the electrolytic solution easily decreases. On the other hand, when the aluminum ion concentration is in a predetermined range, not only a hydrogen ion but also an aluminum ion moves toward the vicinity of the negative electrode at the time of charging. By the influence of the aluminum ion, the number of hydrogen ions existing in the vicinity of the negative electrode is reduced. Thereby, the reaction potential is reduced, and hydrogen generation overvoltage is increased. Because of such a reason, it is supposed that when the aluminum ion concentration is in a predetermined range, excellent

performance with respect to decrease of electrolytic solution is achieved (decrease of electrolytic solution can be suppressed).

The details of the mechanism, in which the ISS cycle characteristics are further improved when the concentration of aluminum ions in the electrolytic solution is in a predetermined range, are not clear. However, as to this point, the present inventors suppose as follows. In other words, when the concentration of aluminum ions is in a predetermined range, the state of charge (SOC) of the lead storage battery 1 is easily kept at a relatively high state. Thus, the negative electrode current-collecting portion 32 is not easily converted into lead sulfate. As a result, it is supposed that deterioration of the negative electrode current-collecting portion 32 (thinning of an ear portion or a rupture) is suppressed, and, therefore, the ISS cycle characteristics are further improved.

<Separator>

FIG. 7 is a view showing a bag-shaped separator 14 and an electrode (for example, the negative electrode plate 13) to be accommodated in the separator 14. As shown in FIG. 7, the separator preferably has a bag-shape such that at least one electrode of the positive electrode plate 12 and the negative electrode plate 13 can be accommodated. For example, an embodiment in which one of the positive electrode plate 12 and the negative electrode plate 13 is accommodated in the bag-shaped separator 14 and is stacked alternately onto the other plate of the positive electrode plate 12 and the negative electrode plate 13 is preferable. When the bag-shaped separator 14 is applied to the positive electrode plate 12, since the positive electrode plate 12 may penetrate through the separator due to elongation of the positive electrode current collector 21, it is preferable that the negative electrode plate 13 is accommodated in the bag-shaped separator 14.

The bag-shaped separator 14 preferably includes a protruding rib, and a base portion that supports the rib. Hereinafter, an aspect of a separator in the present embodiment will be described with reference to FIGs. 7 to 9.

FIG 8(a) is a plan view showing a separator 40 to be used for producing a bag-shaped separator 14; and FIG 8(b) is a sectional view of the separator 40. FIG 9 is a sectional view of the separator 40 and an electrode plate (a positive electrode plate 12 and a negative electrode plate 13).

As shown in FIG 8, the separator 40 includes a flat-shaped base portion 41, a plurality of protruding ribs 42, and mini-ribs 43. The base portion 41 supports the ribs 42 and the mini-ribs 43. A plurality of (a large number of) ribs 42 are formed so as to extend in the longitudinal direction of the separator 40 in the middle of the width direction of the separator 40. The plurality of ribs 42 are disposed substantially in parallel to each other in one surface 40a of the separator 40. Intervals between the ribs 42 are, for example, 3 to 15 mm. One end of the rib 42 in the height direction is integrated with the base portion 41, and the other end of the rib 42 in the height direction is brought into contact with one electrode plate 44a of the positive electrode plate 12 and the negative electrode plate 13 (see FIG 9). The base portion 41 faces the electrode plate 44a in the height direction of the rib 42. A rib is not disposed on the other surface 40b of the separator 40. The other surface 40b of the separator 40 faces or is brought into contact with the other electrode 44b of the positive electrode plate 12 and the negative electrode plate 13 (see FIG. 9).

A plurality of (a large number of) mini-ribs 43 are formed so as to extend in the longitudinal direction of the separator 40 at both sides in the width direction of the separator 40. Mini-ribs 43 have a function of improving the separator strength so as to prevent the corners of the electrode from protruding through the separator and being short-circuited when the lead storage battery 1 is shaken in the horizontal direction. Note here that the height, the width and intervals of the mini-ribs 43 are preferably smaller than those of the ribs 42. Furthermore, the cross-sectional shape of each mini-rib 43 may be the same as or different from that of the rib 42. The cross-sectional shape of the mini-rib 43 is preferably semicircular. Furthermore, in the separator 40, the mini-rib 43 may not be formed.

A thickness T of the base portion 41 is, for example, 0.4 mm or less, and may be 0.3 mm or less or 0.25 mm or less, from the viewpoint of obtaining excellent charge acceptance and discharge characteristics. The lower limit of the thickness T of the base portion 41 is not particularly limited, but it can be 0.05 mm or 0.1 mm from the viewpoint of being excellent in an effect of suppressing a short-circuit.

A height H of the rib 42 (the height in the direction facing the base portion 41 and the electrode) is, for example, 1 mm or less, and may be 0.8 mm or less or 0.6 mm or less, from the viewpoint of obtaining excellent charge acceptance. The lower limit of the height H of the rib 42 is, for example, 0.3 mm, and may be 0.4 mm or 0.5 mm, from the viewpoint of suppressing oxidation deterioration in the positive electrode.

The lower limit of the ratio H/T of the height H of the rib 42 to the thickness T of the base portion 41 is preferably 2 or more, from the viewpoint of being excellent in the oxidation resistance of the separator. When the ratio H/T is 2 or more, it is possible to secure a portion that is not brought into contact with the electrode (for example, the positive electrode plate 12), whereby it is supposed that the oxidation resistance of the separator is improved.

The lower limit of the ratio H/T may be 2.3 or 2.5 from the viewpoint of excellent oxidation resistance and productivity in the separator. The upper limit of the ratio H/T is preferably 6 from the viewpoint of excellent shape-retainability in the rib and the viewpoint of being excellent in the effect of suppressing a short-circuit. It is supposed that

when the ratio H/T is 6 or less, the distance between the positive electrode plate 12 and the negative electrode plate 13 is sufficient, and therefore short circuits can be suppressed. Furthermore, it is supposed that when the ratio H/T is 6 or less, a rib is not ruptured when the lead storage battery 1 is assembled, whereby battery properties such as charge acceptance can be satisfactorily maintained. The upper limit of the ratio H/T may be 5, 4 or 3 from the viewpoints of being excellent in the effect of suppressing a short-circuit, and being excellent in the shape-retainability of the rib.

Furthermore, the upper base width B of the rib 42 (see FIG 8(b)) is preferably 0.1 to 2 mm, and may be 0.2 to 1 mm or 0.2 to 0.8 mm, from the viewpoints of being excellent in the shape-retainability of the rib and being excellent in oxidation resistance. The lower base width A of the rib 42 is preferably 0.2 to 4 mm, and may be 0.3 to 2 mm or 0.4 to 1 mm from the viewpoint of being excellent in the shape-retainability of the rib. The ratio (B/A) of the lower base width A and the upper base width B is preferably 0.1 to 1, and may be 0.2 to 0.8 or 0.3 to 0.6 from the viewpoint of being excellent in the shape-retainability of the rib.

As the separator 40, a microporous polyethylene sheet can be used. Furthermore, usable materials for the separator 40 include a microporous polyethylene sheet; and a laminate of glass fibers and an acid resistant paper. From the viewpoint of having further excellence in the ISS cycle characteristics and having excellence in the performance with respect to decrease of electrolytic solution, instead of singly using the microporous polyethylene sheet, it is preferable to use a microporous polyethylene sheet together with a non-woven fabric (a separator made of non-woven fabric) made of at least one fiber selected from the group consisting of glass fiber, polyolefin fiber and pulp. In this case, a microporous polyethylene sheet and a non-woven fabric may be stacked onto each other such that the surface of a separator that faces the negative electrode plate is comprised of a non-woven fabric. In other words, the negative electrode plate in the lead storage battery and the non-woven fabric may be brought into contact with each other. It is not clear why the ISS cycle characteristics become further excellent when the non-woven fabric is used. As to this point, the present inventors suppose as follows. In other words, use of a non-woven fabric improves the shortage of charge under PSOC, and easily keeps the SOC in a high range. When the SOC shifts in a high range, the negative electrode current-collecting portion 32 is not easily converted into lead sulfate. Consequently, thinning of the negative electrode current-collecting portion 32 does not easily occur. It is supposed that this is one factor that contributes to making the ISS cycle characteristics further excellent. Furthermore, it is not clear why the performance with respect to decrease of electrolytic solution becomes excellent when the non-woven fabric is used, but it is supposed as follows. When the non-woven fabric is used, gas generated by electrolysis is captured by the non-woven fabric, and gas is present in the interface between the electrode material and the electrolytic solution. As a result, the area of the interface between the electrode material and the electrolytic solution is decreased, thus increasing the overvoltage for generating gas. Thus, it is supposed that the performance with respect to decrease of electrolytic solution becomes further excellent.

The above-mentioned non-woven fabric may appropriately contain inorganic oxide powder such as silica. Furthermore, non-woven fabric may be used singly as a separator without combining with the microporous polyethylene sheet.

As shown in FIG. 8(a), the separator 40 used in producing the bag-shaped separator 14 is formed in a form of, for example, a long sheet. The bag-shaped separator 14 is obtained by cutting the separator 40 to an appropriate length, folding the separator 40 in the middle of the longitudinal direction of the separator 40, and attaching the side portions to each other by mechanically sealing, crimping or thermally bonding (for example, reference sign 45 in FIG 7 indicates a mechanically sealed portion). Note here that in this embodiment, as the separator, the separator 40 may be used as it is.

<Battery case>

FIG 10 is a perspective view showing one example of a battery case. FIG 11 is a sectional view taken on line XI-XI of FIG. 10. As shown in FIGs. 10 and 11, the inside of the battery case 2 is divided into six compartments by five partition walls 51, and six cell chambers 52 are formed. Each cell chamber 52 is a space into which the electrode plate group 11 is inserted. The electrode plate group 11 is also called a unit cell, and has an electromotive force of 2 V. Since electric components for vehicles are driven by raising or stepping down a DC voltage of 12 V, connecting six electrode plate groups 11 in series makes 2 V $\times$ 6 = 12 V. Therefore, when the lead storage battery 1 is used for electric components for vehicles, six cell chambers 52 are required. Note here that when the lead storage battery 1 is used for other applications, the number of the cell chambers 52 is not necessarily limited to six.

Both side surfaces of the partition walls 51 and a pair of inner wall surfaces facing the partition walls 51 of the battery case 2 are provided with ribs 53 extending in the height direction of the battery case 2. The ribs 53 have a function of appropriately pressing (compressing) the electrode plate groups 11 that have been inserted into the cell chamber 52 in the stacking direction of the electrode plate group 11 (the stacking direction of the positive electrode plate 12 and the negative electrode plate 13 when the electrode plate group 11 is stored in the battery case 2).

When the inner dimension of cell chamber 52 in the stacking direction of electrode plate group 11 is defined as A1, the ratio (D1/A1) of the thickness D1 of the electrode plate group to the inner dimension A1 is usually 0.85 or

more. D1/A1 may be 0.90 or more or 0.96 or more. The upper limit of D1/A1 is not particularly limited, but may be, for example, 1.00. In other words, D1/A1 is, for example, 0.85 to 1.00, and may be 0.90 to 1.00 or 0.96 to 1.00. Furthermore, the lower limit of the inner dimension A1 may be, for example, 3.0 cm. The upper limit of the inner dimension A1 may be, for example, 5.0 cm.

According to the lead storage battery 1 in accordance with the first embodiment, excellent ISS cycle characteristics are obtained, but it is not clear why such an effect can be obtained. However, the present inventors suppose as follows. In other words, when S1/V1 is 8.9 $cm^{-1}$ or more and p1/n1 is 1.35 or more, it is supposed that the density of electric current per electrode becomes small, and the inside resistance is reduced, whereby the charge acceptance is easily improved. As a result, SOC can be maintained in a high range, SOC shifts in a high range, whereby the negative electrode current-collecting portion 32 is not easily converted into lead sulfate, and therefore, thinning of the negative electrode current-collecting portion 32 does not easily occur. Thus, it is supposed that excellent ISS cycle characteristics are obtained. Furthermore, it is also supposed that a charging reaction easily proceeds, and therefore, lead sulfate generated in the negative electrode current-collecting portion 32 is easily reduced to metallic lead.

<Method for manufacturing lead storage battery>

A method for manufacturing a lead storage battery 1 in accordance with the present embodiment includes, for example: an electrode plate manufacturing step of obtaining electrode plates (a positive electrode plate 12 and a negative electrode plate 13); and an assembly step of assembling component members including the electrode plates to obtain the lead storage battery 1.

In the electrode plate manufacturing step, for example, a current collector (for example, a current collector grid such as a cast grid body, and an expanded grid body) is filled with an electrode material paste (a positive electrode material paste and a negative electrode material paste), and then the resultant current collector is subjected to aging and drying to obtain an unformed electrode plate. The positive electrode material paste contains, for example, a raw material (lead powder or the like) of the positive electrode active material, and may further contain other additives. The negative electrode material paste contains, for example, raw material of the negative electrode active material (lead powder or the like), a resin (bisphenol-based resin or the like) having a sulfone group and/or a sulfonate group. The paste may further contain other additives.

The positive electrode material paste can be obtained, for example, according to the following method. Firstly, the additives (short fiber for reinforcement or the like) and water are added to the raw material of the positive electrode active material. Next, dilute sulfuric acid is added thereto, and then the mixture is kneaded to obtain the positive electrode material paste. When the positive electrode material paste is prepared, red lead ($Pb_3O_4$) may be used as the raw material of the positive electrode active material, from the viewpoint of enabling the formation time to be reduced. The positive current collector 21 is filed with the positive electrode material paste, and the resultant current collector is subjected to aging and drying to obtain an unformed positive electrode.

In the case where the short fiber for reinforcement is used in the positive electrode material paste, the amount of the short fiber for reinforcement to be blended is preferably 0.005 to 0.3% by mass, and may be 0.05 to 0.3% by mass, based on the total mass of the raw material (lead powder or the like) of the positive electrode active material.

As aging conditions for obtaining the unformed positive electrode plate, atmosphere conditions of a temperature of 35 to 85 °C and a humidity of 50 to 98 RH% for 15 to 60 hours are preferable. As drying conditions, conditions of a temperature of 45 to 80 °C for 15 to 30 hours are preferable.

The negative electrode material paste can be obtained, for example, according to the following method. Firstly, additives (resin having a sulfone group and/or a sulfonate group, short fiber for reinforcement, barium sulfate, or the like) are added to the raw material of the negative electrode active material, followed by dry mixing thereof to obtain a mixture. Then, sulfuric acid (dilute sulfuric acid or the like) and a solvent (water such as ion-exchanged water, an organic solvent, or the like) are added to the mixture, and the resultant mixture is kneaded, whereby the negative electrode material paste is obtained. The negative electrode material paste is filled in the negative electrode current collector 31 (for example, a current collector grid such as a cast grid body or an expanded grid body) is filled with the obtained negative electrode paste, and the resultant current collector is subsequently subjected to aging and drying to obtain an unformed negative electrode plate.

In the case where the resin having the sulfone group and/or the sulfonate group (bisphenol-based resin or the like), the carbonaceous material, the short fiber for reinforcement or barium sulfate are used in the negative electrode material paste, the amount of each component to be blended is preferably in the following range. The amount of the resin having the sulfone group and/or the sulfonate group to be blended is preferably 0.01 to 2.0% by mass, and may be 0.05 to 1.0% by mass, 0.1 to 0.5% by mass, or 0.1 to 0.3% by mass in terms of the solid content of the resin, based on the total mass of the raw material (lead powder or the like) of the negative electrode active material. The amount of the carbonaceous material to be blended is preferably 0.1 to 3% by mass, and may be 0.2 to 1.4% by mass in terms of the solid content of the resin, based on the total mass of the raw material (lead powder or the like) of the negative

electrode active material. The amount of the short fiber for reinforcement to be blended is preferably 0.05 to 0.15% by mass, based on the total mass of the raw material (lead powder or the like) of the negative electrode active material. The amount of barium sulfate to be blended is 0.01 to 2.0% by mass, and may be 0.01 to 1.0% by mass, based on the total mass of the raw material (lead powder or the like) of the negative electrode active material.

As aging conditions for obtaining the unformed negative electrode plate, atmosphere conditions of a temperature of 45 to 65 °C and a humidity of 70 to 98 RH% for 15 to 30 hours are preferable. As drying conditions, conditions of a temperature of 45 to 60 °C for 15 to 30 hours are preferable.

In the assembling step, for example, the unformed negative electrode plate and the unformed positive electrode plate that have been produced as described above are alternately stacked with a separator disposed therebetween, and current-collecting portions of the electrode plates that have the same polarity are connected (welded or the like) to each other by a strap to obtain an electrode group. This electrode plate group is arranged in the battery case to produce an unformed battery. Next, the electrolytic solution (for example, dilute sulfuric acid) is poured into the unformed battery, and then a direct current is passed through the unformed battery to perform formation in the battery case. Thus, the lead storage battery 1 is obtained. A lead storage battery having a predetermined specific gravity is usually obtained by allowing only an electric current to pass, but for the purpose of shortening the time for allowing an electric current to pass, electrolytic solution may be poured after dilute sulfuric acid is extracted following formation.

The conditions of the formation and the specific gravity of the dilute sulfuric acid can be adjusted according to the properties of the electrode active material. In addition, the formation treatment is not limited to being carried out after the assembly step, but may be carried out after aging and drying in the electrode manufacturing process (tank formation).

As mentioned above, one aspect of the suitable embodiment of the present disclosure is described, but the present disclosure is not limited to the above-mentioned embodiment.

**Examples**

Examples of the present disclosure will be described below. However, the present disclosure is not necessarily limited to the following Examples.

(Example 1)

[Production of positive electrode current collector]

As a positive electrode current collector, a plate-shaped lead-calcium-tin alloy (content of lead: 0.05% by mass, and content of calcium: 0.5% by mass) was provided with cut-openings, drawn such that the cut-openings were opened widely to prepare an expanded grid body. The positive electrode current collector had a width W2 of 145 mm, height H2 of 110 mm, and a thickness of 0.9 mm.

[Production of unformed positive electrode plate]

To lead powder produced by a ball mill method, 0.07% by mass of acrylic fiber serving as short fiber for reinforcement, and 0.01% by mass of sodium sulfate were added and dry mixed. Each blending amount of acrylic fiber and sodium sulfate is a blending amount based on the total mass of the lead powder. Next, 10% by mass of water and 9% by mass of dilute sulfuric acid (specific gravity: 1.28) were added to the mixture including the lead powder, and the obtained mixture was kneaded to produce a positive electrode material paste (each blending amount of water and dilute sulfuric acid is a blending amount on the basis of the total mass of the lead powder). In producing the positive electrode material paste, in order to avoid a rapid temperature rise, dilute sulfuric acid was added in a stepwise manner. Subsequently, the produced positive electrode material paste was filled in the above-obtained positive electrode current collector, and was subjected to aging in an atmosphere at a temperature of 50 °C and humidity of 98% for 24 hours. Thus, an unformed positive electrode plate in which a positive electrode current collector was filled with unformed positive electrode material was obtained. The unformed positive electrode plate had a filled portion width W1 of 145 mm, a filled portion height H1 of 110 mm, and a thickness of 1.5 mm.

[Production of negative electrode current collector]

As a negative electrode current collector, a plate-shaped lead-calcium-tin alloy (content of lead: 0.05% by mass, and content of calcium: 0.5% by mass) was provided with cut-openings, drawn such that the cut-openings were opened widely to prepare an expanded grid body. The negative electrode current collector had a width W2 of 145 mm, height H2 of 110 mm, and a thickness of 0.8 mm.

[Production of unformed negative electrode plate]

To lead powder produced by a ball mill method, 0.1% by mass of short fiber for reinforcement (acrylic fiber), 0.2% by mass of acetylene black, and 1.0% by mass of barium sulfate were added as additives, and dry mixed (the above-mentioned blending amount is on the basis of the total mass of the lead powder). Next, 0.2% by mass (blending amount in terms of a solid content of the resin based on the total mass of the lead powder) of lignin sulfonate (Product name: Vanilex N, manufactured by NIPPON PAPER INDUSTRIES CO., LTD.), and 10% by mass of water (blending amount based on the total mass of the lead powder) based on the total mass of the raw material of the negative electrode active material were added and then kneaded. Subsequently, 9.5% by mass of dilute sulfuric acid (specific gravity: 1.280) was added in a small amount and kneaded based on the total mass of the raw material of the negative electrode active material, and a negative electrode material paste was produced. Subsequently, the produced negative electrode material paste was filled into the above-obtained negative electrode current collector, and the mixture was subjected to aging in an atmosphere at a temperature of 50 °C and humidity of 98% for 20 hours. Thus, an unformed negative electrode plate in which a negative electrode current collector was filled with unformed negative electrode material was obtained. The unformed negative electrode plate had a filled portion width W1 of 145 mm, a filled portion height H1 of 110 mm, and a thickness of 1.3 mm.

[Preparation of separator]

A sheet-like article having a plurality of protruding ribs and a base portion supporting the ribs on one surface thereof was processed into a bag shape such that the surface having the ribs formed thereon faced the outside to prepare a separator (a bag-shaped separator) (see FIGs. 7 and 8). In the separator, a total thickness was 0.8 mm, a base portion thickness T was 0.2 mm, a rib height H was 0.6 mm, a width B of a rib upper base was 0.4 mm, and a width A of a rib lower base was 0.8 mm.

[Assembly of battery]

An unformed negative electrode plate was accommodated in the obtained bag-shaped separator. Subsequently, seven unformed positive electrode plates and eight unformed negative electrode plates which were accommodated in the bag-shaped separator were alternately stacked, such that ribs on the separator were brought into contact with the unformed positive electrode plates. Next, a current-collecting portion on the unformed positive electrode plate and a current-collecting portion on the unformed negative electrode plate were cluster welded to the positive electrode-side strap and the negative electrode-side strap for each polarity to obtain an electrode plate group. The thickness D1 of the electrode plate group was 3.36 cm.

A battery case having six cell chambers each having an inner dimension A1 of 3.5 cm was prepared, and electrode plate groups were each inserted into the six cell chambers of the battery case. Then, the electrode plate groups were inner-cell connected, and then a lid was thermally welded to the battery case. Thereafter, each liquid port plug was opened, and dilute sulfuric acid serving as an electrolytic solution was poured into each cell from each injection port provided in the lid. Then, an electric current of 25 A was allowed to flow at an ambient temperature of 40 °C for 20 hours, and the battery case was subjected to formation to produce an 85D23 battery (lead storage battery) defined in JIS D5301. The specific gravity of the electrolytic solution was adjusted to 1.28. The content of the positive electrode active material after formation (based on the total mass of the positive electrode material) was 99.9% by mass, and the content of the negative electrode active material after formation (based on the total mass of the negative electrode material) was 98.4% by mass.

The total surface area S1 of the electrode material filled portion, the apparent total volume VI, the ratio (S1/V1) of total surface area S1 of the electrode material filled portion to the apparent total volume V1, the ratio (p1/n1) of the mass p1 of the positive electrode material to the mass n1 of the negative electrode material, the thickness D1 of the electrode plate group, the inner dimension A1 of the cell chamber, and the ratio (D1/A1) of the thickness D1 of the electrode plate group to the inner dimension A1 of cell chamber in the lead storage battery of Example 1 are shown in Table 1.

[Measurement of specific surface area of positive electrode material and specific surface area of negative electrode material]

A measurement sample of the specific surface area was prepared according to the following procedure. First, the formed battery was disassembled, the electrode plates (the positive electrode plates and the negative electrode plates) were taken out, washed with water, and then were dried at 50 °C for 24 hours. Next, 2 g of each of the electrode materials (the positive electrode material and the negative electrode material) was collected from the center portion of

the above described electrode plates, and was dried at 130 °C for 30 minutes, whereby the measurement samples were produced.

While the measurement sample which was prepared in the above description was cooled with liquid nitrogen, the amount of adsorbed nitrogen gas was measured at a liquid nitrogen temperature according to a multipoint method, and the specific surface areas of the positive electrode material and the negative electrode material after the formation were calculated according to the BET method. The measurement conditions were as follows. As a result of having measured the measurement samples in this manner, the specific surface area of the positive electrode material was 6.3 $m^2/g$ and the specific surface area of the negative electrode material was 0.5 $m^2/g$.

{Measurement conditions of specific surface area}

Apparatus: HM-2201FS (manufactured by Macsorb)
Deaeration time: at 130 °C for 10 minutes
Cooling: by liquid nitrogen for 4 minutes
Flow rate of adsorption gas: 25 mL/min

[Calculation of ratio (p1/n1) of mass p1 of positive electrode material to mass n1 of negative electrode material]

Calculation of p1/n1 was performed as follows. Firstly, a positive electrode plate after formation was taken out from the battery case, washed with water for one hour, and then dried under an air atmosphere at 80 °C for 24 hours. The mass of the positive electrode plate was measured. Then, a positive electrode material was taken out from the positive electrode plate, and mass of a positive electrode current collector was calculated. The total mass of the positive electrode material was calculated from an amount obtained by removing the mass of the positive electrode current collector from the mass of the positive electrode plate. The total mass of a negative electrode material was calculated by the same procedure with respect to a negative electrode plate except that drying was carried out under a nitrogen atmosphere. From the total mass of the positive electrode material and the total mass of the negative electrode material per cell, p1/n1 was calculated, and p1/n1 was 1.35.

(Example 2)

A lead storage battery of Example 2 was produced in the same manner as in Example 1 except that an 85D26 battery (lead storage battery) specified in JIS D5301 instead of the 85D23 battery was produced (see Table 1). The inner dimension A1 in the 85D26 battery is 3.9 cm. The content of the positive electrode active material after formation (based on the total mass of the positive electrode material), the content of the negative electrode active material after formation, the specific surface area of the positive electrode material, and the specific surface area of the negative electrode material were same as those in Example 1.

(Examples 3 to 13 and Comparative Examples 1 to 5)

Lead storage batteries of Examples 3 to 13 and Comparative Examples 1 to 5 were produced, respectively, in the same manner as in Example 1 except that, in Examples 3 to 13 and Comparative Examples 1 to 5, filling amounts of a positive electrode material and a negative electrode material were adjusted, and the numbers of positive electrode plates and negative electrode plates to be used in electrode plate groups were changed, and thereby the total surface area S1 of the electrode material filled portion, the apparent total volume V1, the ratio (S1/V1) of the total surface area S1 of the electrode material filled portion to the apparent total volume VI, the ratio (p1/n1) of the mass p1 of the positive electrode material to the mass n1 of the negative electrode material, the thickness D1 of the electrode plate group, the inner dimension A1 of the cell chamber, and the ratio (D1/A1) of the thickness D1 of the electrode plate group to the inner dimension A1 of the cell chamber were adjusted to the values shown in Table 1. Therefore, the content of the positive electrode active material after formation (based on the total mass of the positive electrode material), the content of the negative electrode active material after formation, the specific surface area of the positive electrode material, and the specific surface area of the negative electrode material were the same as those in Example 1. Note here that in Examples 3 to 5, seven positive electrode plates and eight negative electrode plates were used for one electrode plate group. In Examples 6 to 9, eight positive electrode plates and eight negative electrode plates were used for one electrode plate group. In Examples 10 to 13, eight positive electrode plates and nine negative electrode plates were used for one electrode plate group. In Comparative Examples 1 and 2, five positive electrode plates and six negative electrode plates were used for one electrode plate group. In Comparative Examples 3 and 4, six positive electrode plates and seven negative electrode plates were used for one electrode plate group. In Comparative Example 5, seven positive electrode plates and eight negative electrode plates were used for one electrode plate group.

(Examples 14 to 22)

Lead storage batteries of Examples 14 to 22 were produced, respectively, in the same manner as in Example 1 except that, lignin sulfonate (resin including a sulfone group and/or a sulfonate group (in Table 2, negative electrode organic additives)) and acetylene black (a carbonaceous material) in producing the unformed negative electrode plate, aluminum (A1) ion concentration in the electrolytic solution, as well as the specific gravity of the electrolytic solution were changed or adjusted as shown in Table 2. In the lead storage batteries in Examples 14 to 22, the content (based on the total mass of the positive electrode material) of the positive electrode active material after formation, the content of the negative electrode active material after formation, the specific surface area of the positive electrode material, the specific surface area of the negative electrode material, the total surface area S1 of the electrode material filled portion, the apparent total volume VI, the ratio (S1/V1) of the total surface area S1 of the electrode material filled portion to the apparent total volume VI, the thickness D1 of the electrode plate group, the inner dimension A1 of the cell chamber, the ratio (D1/A1) of the thickness D1 of the electrode plate group to the inner dimension A1 of the cell chamber, and the ratio (p1/n1) of the mass p1 of the positive electrode material to the mass n1 of the negative electrode material were the same as those in Example 1. Note here that in Table 2, details of bisphenol-based resin, Ketjen black, and scaly graphite are as follows:

- Bisphenol-based resin: condensate of bisphenol, aminobenzenesulfonic acid, and formaldehyde (Product name: VISPERSE P215 manufactured by Nippon Paper Industries Co., Ltd., blending amount: 0.2 parts by mass in terms of resin solid content)
- Ketjen black: 0.2 parts by mass of product name "Carbon ECP600JD" manufactured by Lion Corporation
- Scaly graphite: average primary particle diameter: 180 μm, 1.6 parts by mass

(Example 23)

A lead storage battery of Example 23 was produced in the same manner as in Example 1 except that non-woven fabric was provided on a surface of the separator such that the surface of the separator facing the negative electrode plate was comprised of a non-woven fabric, and that the height H of the rib of the separator was adjusted such that a thickness D1 of the electrode plate group was the same value as the thickness D1 of the electrode plate group in Example 1 (see Table 2). Note here that as the non-woven fabric, non-woven fabric made of glass fiber (manufactured by Japan Vilene Company, Ltd., thickness: 0.1 mm, mass per unit area: 40 $g/m^2$) was used. In the lead storage battery of Example 23, the content (based on the total mass of the positive electrode material) of the positive electrode active material after formation, the content of the negative electrode active material after formation, the specific surface area of the positive electrode material, the specific surface area of the negative electrode material, the total surface area S1 of the electrode material filled portion, the apparent total volume VI, the ratio (S1/V1) of the total surface area S1 of the electrode material filled portion to the apparent total volume VI, the thickness D1 of the electrode plate group, the inner dimension A1 of the cell chamber, the ratio (D1/A1) of the thickness D1 of the electrode plate group to the inner dimension A1 of the cell chamber, and the ratio (p1/n1) of the mass p1 of the positive electrode material to the mass n1 of the negative electrode material were the same as those in Example 1.

(Example 24)

A lead storage battery of Example 24 was produced in the same manner as in Example 1 except that non-woven fabric was provided on a surface of the separator such that the surface of the separator facing the negative electrode plate was comprised of a non-woven fabric, and that the height H of the rib of the separator was adjusted such that a thickness D1 of the electrode plate group was the same value as the thickness D1 of the electrode plate group in Example 1 (see Table 3). Note here that as the non-woven fabric, non-woven fabric made of glass fiber (manufactured by Japan Vilene Company, Ltd., thickness: 0.3 mm) was used. In the lead storage battery of Example 24, the content (based on the total mass of the positive electrode material) of the positive electrode active material after formation, the content of the negative electrode active material after formation, the specific surface area of the positive electrode material, the specific surface area of the negative electrode material, the total surface area S1 of the electrode material filled portion, the apparent total volume V1, the ratio (S1/V1) of the total surface area S1 of the electrode material filled portion to the apparent total volume VI, the thickness D1 of the electrode plate group, the inner dimension A1 of the cell chamber, the ratio (D1/A1) of the thickness D1 of the electrode plate group to the inner dimension A1 of the cell chamber, and the ratio (p1/n1) of the mass p1 of the positive electrode material to the mass n1 of the negative electrode material were the same as those in Example 1.

<Evaluation of battery characteristics>

Lead storage batteries of Examples and Comparative Examples were evaluated for the charge acceptance, the low-temperature high-rate discharge performance, the ISS cycle characteristics, and the performance with respect to decrease of electrolytic solution. Results are shown in Tables 1, 2, and 3. Note here that evaluation of the low-temperature high-rate discharge performance was carried out only in Examples 1 and 14 to 23, and evaluation of the performance with respect to decrease of electrolytic solution was carried out only in Examples 1, 15 to 17 and 24 as well as in Comparative Example 5.

[Charge Acceptance]

The produced lead storage batteries were discharged at a constant current of 10.4 A at 25 °C for 30 minutes, and were allowed to stand still for 12 hours. Thereafter, the lead storage battery was charged at a constant voltage of 14.0 V for 60 seconds under a limited electric current of 100 A, and an electric current value at 5 seconds from starting discharge was measured. By comparing the electric current values, the charge acceptance was evaluated. Note here that the charge acceptance was relatively evaluated based on the measurement result of Example 1 where the measurement result of Example 1 was defined as 100.

[Low-temperature high-rate discharge performance]

A battery temperature of the produced lead storage batteries was adjusted to -15 °C, and constant-current discharge at 300 A was carried out at -15 °C, and the discharge duration time until the cell voltage became lower than 6.0 V was measured. By comparing the discharge duration times, the low-temperature high-rate discharge performance was evaluated. Note here that the low-temperature high-rate discharge performance was relatively evaluated based on the measurement result of Example 1 where the measurement result of Example 1 was defined as 100.

[ISS cycle characteristics]

The ambient temperature was adjusted so as to bring the battery temperature to 25 °C. Batteries were subjected to a cycle test. In the cycle test, one cycle is defined as an operation of discharging at a constant current of 45 A for 59 seconds and 300 A for 1 second, and then charging at a constant current and constant voltage of 100 A and 14 V for 60 seconds. Every 3600 cycles, batteries were stood still for 40 hours, after which cycles started again. This test is a cycle test simulating the use of a lead storage battery in an ISS vehicle. In this cycle test, charging gradually becomes insufficient when full charging is not carried out, because the charging amount is low in relation to the discharging amount. As a result, there is a gradual decline in the first-second voltage, which is one second of discharge carried out at a discharge current of 300 A. In other words, when the negative electrode is polarized during constant current and constant voltage charging and a switch is prematurely made to constant voltage charging, the charging current weakens and charging becomes insufficient. In this life test, the battery was judged to have reached the end of its life when the first-second voltage at 300-A discharge dropped below 7.2 V. The numbers of the cycles were compared so as to evaluate the ISS cycle characteristics. Note here that the ISS cycle characteristics were relatively evaluated based on the measurement result of Example 1 where the measurement result of Example 1 was defined as 100.

[Evaluation of performance with respect to decrease of electrolytic solution]

The performance with respect to decrease of electrolytic solution was evaluated as follows. A battery temperature was adjusted to 60 °C, constant voltage charge was carried out for 42 days (1008 hours) at 14.4 V. A difference between the weight of the battery immediately before constant voltage was carried out when the battery temperature reached 60 °C and the weight of the battery immediately after the constant voltage charge for 42 days had been finished was defined as the amount of decreased electrolytic solution. By comparing this amount, the performance with respect to decrease of electrolytic solution was evaluated. Note here that the performance with respect to decrease of electrolytic solution was relatively evaluated based on the decreased electrolytic solution of Comparative Example 5 where the decreased electrolytic solution of Comparative Example 5 was defined as 100.

[Table 1]

| | S1 ($cm^2$) | V1 ($cm^3$) | S1/V1 ($cm^{-1}$) | D1 (cm) | A1 (cm) | D1/A1 | P1/N1 | Charge acceptance | ISS cycle characteristics |
|---|---|---|---|---|---|---|---|---|---|
| Example 1 | 4785 | 536 | 8.93 | 3.36 | 3.50 | 0.96 | 1.35 | 100 | 100 |

(continued)

| | S1 ($cm^2$) | V1 ($cm^3$) | S1/V1 ($cm^{-1}$) | D1 (cm) | A1 (cm) | D1/A1 | P1/N1 | Charge acceptance | ISS cycle characteristics |
|---|---|---|---|---|---|---|---|---|---|
| Example 2 | 4785 | 536 | 8.93 | 3.36 | 3.90 | 0.86 | 1.35 | 100 | 100 |
| Example 3 | 4785 | 536 | 8.93 | 3.36 | 3.50 | 0.96 | 1.40 | 100 | 100 |
| Example 4 | 4785 | 536 | 8.93 | 3.36 | 3.50 | 0.96 | 1.45 | 100 | 120 |
| Example 5 | 4785 | 536 | 8.93 | 3.36 | 3.50 | 0.96 | 1.47 | 100 | 120 |
| Example 6 | 5104 | 536 | 9.52 | 3.36 | 3.50 | 0.96 | 1.35 | 100 | 110 |
| Example 7 | 5104 | 536 | 9.52 | 3.36 | 3.50 | 0.96 | 1.40 | 100 | 110 |
| Example 8 | 5104 | 536 | 9.52 | 3.36 | 3.50 | 0.96 | 1.45 | 100 | 120 |
| Example 9 | 5104 | 536 | 9.52 | 3.36 | 3.50 | 0.96 | 1.47 | 100 | 120 |
| Example 10 | 5423 | 536 | 10.12 | 3.36 | 3.50 | 0.96 | 1.35 | 110 | 130 |
| Example 11 | 5423 | 536 | 10.12 | 3.36 | 3.50 | 0.96 | 1.40 | 110 | 130 |
| Example 12 | 5423 | 536 | 10.12 | 3.36 | 3.50 | 0.96 | 1.45 | 110 | 130 |
| Example 13 | 5423 | 536 | 10.12 | 3.36 | 3.50 | 0.96 | 1.47 | 110 | 130 |
| Comparative Example 1 | 3509 | 536 | 6.55 | 3.36 | 3.50 | 0.96 | 1.35 | 75 | 75 |
| Comparative Example 2 | 3509 | 397 | 8.84 | 2.49 | 3.50 | 0.71 | 1.35 | 75 | 75 |
| Comparative Example 3 | 4147 | 536 | 7.74 | 3.36 | 3.50 | 0.96 | 1.35 | 85 | 85 |
| Comparative Example 4 | 4147 | 467 | 8.87 | 2.93 | 3.50 | 0.84 | 1.35 | 85 | 85 |
| Comparative Example 5 | 4785 | 536 | 8.93 | 3.36 | 3.50 | 0.96 | 1.30 | 100 | 85 |

[Table 2]

| | Negative electrode organic additives | Al ion concentration (mol/L) | Specific gravity of electrolytic solution | Carbonaceous material | Non-woven fabric | Charge acceptance | Low-temperature high-rate discharge characteristics | ISS cycle characteristics |
|---|---|---|---|---|---|---|---|---|
| Example 1 | lignin sulfonate | - | 1.28 | acetylene black | - | 100 | 100 | 100 |
| Example 14 | bisphenol-based resin | - | 1.28 | acetylene black | - | 130 | 80 | 130 |
| Example 15 | lignin sulfonate | 0.04 | 1.28 | acetylene black | - | 110 | 95 | 110 |
| Example 16 | lignin sulfonate | 0.10 | 1.28 | acetylene black | - | 120 | 90 | 120 |
| Example 17 | lignin sulfonate | 0.14 | 1.28 | acetylene black | - | 130 | 85 | 130 |
| Example 18 | lignin sulfonate | - | 1.25 | acetylene black | - | 120 | 90 | 120 |
| Example 19 | lignin sulfonate | - | 1.29 | acetylene black | - | 95 | 105 | 95 |
| Example 20 | bisphenol-based resin | 0.10 | 1.25 | acetylene black | - | 150 | 70 | 150 |
| Example 21 | lignin sulfonate | - | 1.28 | Ketjen black | - | 110 | 90 | 100 |
| Example 22 | lignin sulfonate | - | 1.28 | scaly graphite | - | 100 | 100 | 120 |
| Example 23 | lignin sulfonate | - | 1.28 | acetylene black | used | 95 | 95 | 130 |

[Table 3]

| | Negative electrode organic additives | Al ion concentration (mol/L) | Specific gravity of electrolytic solution | Carbonaceous material | Non-woven fabric | Performance with respect to decrease of electrolytic solution (%) |
|---|---|---|---|---|---|---|
| Comparative Example 5 | lignin sulfonate | - | 1.28 | acetylene black | - | 100 |
| Example 1 | lignin sulfonate | - | 1.28 | acetylene black | - | 100 |
| Example 15 | lignin sulfonate | 0.04 | 1.28 | acetylene black | - | 95 |
| Example 16 | lignin sulfonate | 0.1 | 1.28 | acetylene black | - | 87 |
| Example 17 | lignin sulfonate | 0.14 | 1.28 | acetylene black | - | 82 |
| Example 24 | lignin sulfonate | - | 1.28 | acetylene black | used | 60 |

**Reference Signs List**

1... lead storage battery, 2... battery case, 11... electrode plate group, 12... positive electrode plate, 13... negative electrode plate, 14... bag-shaped separator, 15... positive electrode-side strap, 16... negative electrode-side strap, 21... positive electrode current collector, 22... positive electrode current-collecting portion (positive electrode ear portion), 23... positive electrode material, 24... positive electrode material filled portion, 31... negative electrode current collector, 32... negative electrode current-collecting portion (negative electrode ear portion), 33... negative electrode material, 34... negative electrode material filled portion, 40... separator, 45... mechanically sealed portion, 52... cell chamber, 53... rib.

**Claims**

**1.** A lead storage battery (1) comprising:

a battery case (2) comprising a cell chamber (52);
an electrode plate group (11) being provided in the cell chamber (52), and comprising a separator (14), a positive electrode plate (12) and a negative electrode plate (13), the positive electrode plate (12) and the negative electrode plate (13) being alternately stacked with the separator (14) disposed therebetween; and
an electrolytic solution accommodated in the cell chamber (52),
wherein
the positive electrode plate (12) comprises:

a positive electrode material filled portion (24) comprised of a positive electrode material (23);
a positive electrode current collector (21) supporting the positive electrode material filled portion (24); and
a positive electrode ear portion (22) provided on an upper peripheral portion of the current collector,

the negative electrode plate (13) comprises:

a negative electrode material filled portion (34) comprised of a negative electrode material (33);
a negative electrode current collector (31) supporting the negative electrode material filled portion (34); and
a negative electrode ear portion (32) provided on an upper peripheral portion of the current collector,

p1/n1 is 1.35 or more, wherein p1 represents a mass of the positive electrode material (23) and n1 represents a mass of the negative electrode material (33), and
**characterised in that**

S1/V1 is 8.9 $cm^{-1}$ or more, wherein S1 represents a total surface area of the positive electrode material filled portion (24) and the negative electrode material filled portion (34) and V1 represents an apparent total volume of the positive electrode material filled portion (24) and the negative electrode material filled portion (34), wherein S1 is represented by

$$S1 = (W1 \times H1) \times 2 \times N1,$$

and V1 is represented by

$$V1 = W1 \times H1 \times D1,$$

wherein W1 represents a width of the electrode material filled portion (24, 34), H1 represents a height of the electrode material filled portion (24, 34), N1 represents a number of the electrode plates (12, 13) in the electrode plate group (11), and D1 represents a thickness of the electrode plate group (11).

**2.** The lead storage battery (1) according to claim 1, wherein the negative electrode material (33) further comprises a resin comprising a sulfone group and/or a sulfonate group.

**3.** The lead storage battery (1) according to claim 2, wherein the resin comprising a sulfone group and/or a sulfonate group is a bisphenol-based resin.

**4.** The lead storage battery (1) according to claim 3, wherein the bisphenol-based resin is a condensate of bisphenol, aminobenzenesulfonic acid, and formaldehyde.

**5.** The lead storage battery (1) according to any one of claims 1 to 4, wherein the electrolytic solution comprises an aluminum ion.

**6.** The lead storage battery (1) according to claim 5, wherein a concentration of the aluminum ion is 0.02 to 0.14 mol/L.

**7.** The lead storage battery (1) according to any one of claims 1 to 6, wherein the negative electrode material (33) further comprises a carbonaceous material.

**8.** The lead storage battery (1) according to claim 7, wherein the carbonaceous material is Ketjen black or scaly graphite.

**9.** The lead storage battery (1) according to any one of claims 1 to 8, wherein the electrode plate group (11) comprises a non-woven fabric between the negative electrode plate (13) and the separator (14), and the negative electrode plate (13) and the non-woven fabric come into contact with each other.

**10.** The lead storage battery (1) according to claim 9, wherein the non-woven fabric comprises at least one fiber selected from a group consisting of a glass fiber, a polyolefin fiber and a fiber made from pulp.

**11.** The lead storage battery (1) according to any one of claims 1 to 10, wherein the positive electrode material (23) has a specific surface area of 4 $m^2/g$ or more.

**12.** The lead storage battery (1) according to any one of claims 1 to 11, wherein the negative electrode material (33) has a specific surface area of 0.4 $m^2/g$ or more.

**13.** The lead storage battery (1) according to any one of claims 1 to 12, wherein the electrolytic solution has a specific gravity of 1.25 to 1.29.

**14.** The lead storage battery (1) according to any one of claims 1 to 13, wherein D1/A1 is 0.85 or more, wherein D1 represents a thickness of the electrode plate group (11) and A1 represents an inner dimension of the cell chamber (52) in a stacking direction of the electrode plate group (11).

**15.** The lead storage battery (1) according to any one of claims 1 to 14, wherein

the separator (14) comprises a rib (42, 43) and a base portion (41) supporting the rib (42, 43), the base portion (41) has a thickness of 0.3 mm or less, and the rib (42, 43) has a height of 0.6 mm or less.

**16.** The lead storage battery (1) according to any one of claims 1 to 15, wherein the positive electrode material (23) comprises a positive electrode active material, the negative electrode material (33) comprises a negative electrode active material, a content of the positive electrode active material with respect to a mass p1 of the positive electrode material (23) is 95% by mass or more, and a content of the negative electrode active material with respect to a mass n1 of the negative electrode material (33) is 93% by mass or more.

## Patentansprüche

**1.** Bleiakkumulator (1), umfassend:

ein Batteriegehäuse (2), das eine Zellenkammer (52) umfasst;
eine Elektrodenplattengruppe (11), die in der Zellenkammer (52) bereitgestellt ist und einen Separator (14), eine positive Elektrodenplatte (12) und eine negative Elektrodenplatte (13) umfasst, wobei die positive Elektrodenplatte (12) und die negative Elektrodenplatte (13) abwechselnd mit dem Separator (14) dazwischen angeordnet gestapelt sind; und
eine Elektrolytlösung, die in der Zellenkammer (52) untergebracht ist,
wobei
die positive Elektrodenplatte (12) umfasst:

einen mit positivem Elektrodenmaterial gefüllten Abschnitt (24), der aus einem positiven Elektrodenmaterial (23) besteht;
einen Stromabnehmer (21) der positiven Elektrode, der den mit positivem Elektrodenmaterial gefüllten Abschnitt (24) trägt; und
einen Laschenabschnitt (22) der positiven Elektrode, der an einem oberen Umfangsabschnitt des Stromabnehmers bereitgestellt ist,
die negative Elektrodenplatte (13) umfasst:

einen mit negativem Elektrodenmaterial gefüllten Abschnitt (34), der aus einem negativen Elektrodenmaterial (33) besteht;
einen Stromabnehmer (31) der negativen Elektrode, der den mit negativem Elektrodenmaterial gefüllten Abschnitt (34) trägt; und
einen Laschenabschnitt (32) der negativen Elektrode, der an einem oberen Umfangsabschnitt des Stromabnehmers bereitgestellt ist,
p1/n1 1,35 oder mehr beträgt, wobei p1 eine Masse des positiven Elektrodenmaterials (23) darstellt und n1 eine Masse des negativen Elektrodenmaterials (33) darstellt, und
**dadurch gekennzeichnet, dass**
S1/V1 8,9 $cm^{-1}$ oder mehr beträgt, wobei S1 eine Gesamtoberfläche des mit positivem Elektrodenmaterial gefüllten Abschnitts (24) und des mit negativem Elektrodenmaterial gefüllten Abschnitts (34) darstellt, und V1 ein scheinbares Gesamtvolumen des mit positivem Elektrodenmaterial gefüllten Abschnitts (24) und des mit negativem Elektrodenmaterial gefüllten Abschnitts (34) darstellt,
wobei S1 dargestellt wird durch

$$S1 = (W1 \times H1) \times 2 \times N1,$$

und V1 dargestellt wird durch

$$V1 = W1 \times H1 \times D1,$$

wobei W1 eine Breite des mit Elektrodenmaterial gefüllten Abschnitts (24, 34) darstellt, H1 eine Höhe des mit Elektrodenmaterial gefüllten Abschnitts (24, 34) darstellt, N1 eine Anzahl der Elektrodenplatten

(12, 13) in der Elektrodenplattengruppe (11) darstellt, und D1 eine Dicke der Elektrodenplattengruppe (11) darstellt.

**2.** Bleiakkumulator (1) nach Anspruch 1, wobei das negative Elektrodenmaterial (33) weiter ein Harz umfasst, das eine Sulfongruppe und/oder eine Sulfonatgruppe umfasst.

**3.** Bleiakkumulator (1) nach Anspruch 2, wobei es sich bei dem Harz, das eine Sulfongruppe und/oder eine Sulfonatgruppe umfasst, um ein bisphenolbasiertes Harz handelt.

**4.** Bleiakkumulator (1) nach Anspruch 3, wobei es sich bei dem bisphenolbasierten Harz um ein Kondensat aus Bisphenol, Aminobenzolsulfonsäure und Formaldehyd handelt.

**5.** Bleiakkumulator (1) nach einem der Ansprüche 1 bis 4, wobei die Elektrolytlösung ein Aluminiumion umfasst.

**6.** Bleiakkumulator (1) nach Anspruch 5, wobei eine Konzentration des Aluminiumions 0,02 bis 0,14 mol/L beträgt.

**7.** Bleiakkumulator (1) nach einem der Ansprüche 1 bis 6, wobei das negative Elektrodenmaterial (33) weiter ein kohlenstoffhaltiges Material umfasst.

**8.** Bleiakkumulator (1) nach Anspruch 7, wobei es sich bei dem kohlenstoffhaltigen Material um Ketjen Black oder Graphitschuppen handelt.

**9.** Bleiakkumulator (1) nach einem der Ansprüche 1 bis 8, wobei die Elektrodenplattengruppe (11) ein Vlies zwischen der negativen Elektrodenplatte (13) und dem Separator (14) umfasst, und die negative Elektrodenplatte (13) und das Vlies miteinander in Berührung kommen.

**10.** Bleiakkumulator (1) nach Anspruch 9, wobei das Vlies mindestens eine Faser umfasst, ausgewählt aus einer Gruppe bestehend aus einer Glasfaser, einer Polyolefinfaser und einer aus Pulpe hergestellten Faser.

**11.** Bleiakkumulator (1) nach einem der Ansprüche 1 bis 10, wobei das positive Elektrodenmaterial (23) eine spezifische Oberfläche von 4 $m^2/g$ oder mehr aufweist.

**12.** Bleiakkumulator (1) nach einem der Ansprüche 1 bis 11, wobei das negative Elektrodenmaterial (33) eine spezifische Oberfläche von 0,4 $m^2/g$ oder mehr aufweist.

**13.** Bleiakkumulator (1) nach einem der Ansprüche 1 bis 12, wobei die Elektrolytlösung eine spezifische Dichte von 1,25 bis 1,29 aufweist.

**14.** Bleiakkumulator (1) nach einem der Ansprüche 1 bis 13, wobei D1/A1 0,85 oder mehr beträgt, wobei D1 eine Dicke der Elektrodenplattengruppe (11) darstellt, und A1 eine Innenabmessung der Zellenkammer (52) in einer Stapelrichtung der Elektrodenplattengruppe (11) darstellt.

**15.** Bleiakkumulator (1) nach einem der Ansprüche 1 bis 14, wobei
der Separator (14) eine Rippe (42, 43) und einen Basisabschnitt (41) umfasst, der die Rippe (42, 43) trägt,
der Basisabschnitt (41) eine Dicke von 0,3 mm oder weniger aufweist, und
die Rippe (42, 43) eine Höhe von 0,6 mm oder weniger aufweist.

**16.** Bleiakkumulator (1) nach einem der Ansprüche 1 bis 15, wobei das positive Elektrodenmaterial (23) ein positiv elektrodenaktives Material umfasst, das negative Elektrodenmaterial (33) ein negativ elektrodenaktives Material umfasst, ein Gehalt des positiv elektrodenaktiven Materials in Bezug auf eine Masse p1 des positiven Elektrodenmaterials (23) 95 Masse-% oder mehr beträgt, und ein Gehalt des negativ elektrodenaktiven Materials in Bezug auf eine Masse n1 des negativen Elektrodenmaterials (33) 93 Masse-% oder mehr beträgt.

## Revendications

**1.** Accumulateur au plomb (1) comprenant :

un bac d'accumulateur (2) comprenant une chambre de cellules (52) ;
un groupe de plaques d'électrode (11) étant prévu dans la chambre de cellules (52), et comprenant un séparateur (14), une plaque d'électrode positive (12) et une plaque d'électrode négative (13), la plaque d'électrode positive (12) et la plaque d'électrode négative (13) étant empilées en alternance avec le séparateur (14) disposé entre elles ; et
une solution électrolytique logée dans la chambre de cellules (52),
dans lequel
la plaque d'électrode positive (12) comprend :

une portion remplie de matière d'électrode positive (24) composée d'une matière d'électrode positive (23) ;
un collecteur de courant d'électrode positive (21) supportant la portion remplie de matière d'électrode positive (24) ; et
une portion de languette d'électrode positive (22) prévue sur une portion périphérique supérieure du collecteur de courant,
la plaque d'électrode négative (13) comprend :

une portion remplie de matière d'électrode négative (34) composée d'une matière d'électrode négative (33) ;
un collecteur de courant d'électrode négative (31) supportant la portion remplie de matière d'électrode négative (34) ; et
une portion de languette d'électrode négative (32) prévue sur une portion périphérique supérieure du collecteur de courant,
p1/n1 est de 1,35 ou plus, dans lequel p1 représente une masse de la matière d'électrode positive (23) et n1 représente une masse de la matière d'électrode négative (33), et
**caractérisé en ce que**
S1/V1 est de 8,9 $cm^{-1}$ ou plus, dans lequel S1 représente une aire totale de la portion remplie de matière d'électrode positive (24) et de la portion remplie de matière d'électrode négative (34) et V1 représente un volume total apparent de la portion remplie de matière d'électrode positive (24) et de la portion remplie de matière d'électrode négative (34),
dans lequel S1 est représentée par

$$S1 = (W1 \times H1) \times 2 \times N1,$$

et V1 est représenté par

$$V1 = W1 \times H1 \times D1,$$

dans lequel W1 représente une largeur de la portion remplie de matière d'électrode (24, 34), H1 représente une hauteur de la portion remplie de matière d'électrode (24, 34), N1 représente un nombre des plaques d'électrode (12, 13) dans le groupe de plaques d'électrode (11), et D1 représente une épaisseur du groupe de plaques d'électrode (11).

**2.** Accumulateur au plomb (1) selon la revendication 1, dans lequel la matière d'électrode négative (33) comprend en outre une résine comprenant un groupe sulfone et/ou un groupe sulfonate.

**3.** Accumulateur au plomb (1) selon la revendication 2, dans lequel la résine comprenant un groupe sulfone et/ou un groupe sulfonate est une résine à base de bisphénol.

**4.** Accumulateur au plomb (1) selon la revendication 3, dans lequel la résine à base de bisphénol est un condensat de bisphénol, d'acide aminobenzènesulfonique, et de formaldéhyde.

**5.** Accumulateur au plomb (1) selon l'une quelconque des revendications 1 à 4, dans lequel la solution électrolytique comprend un ion aluminium.

**6.** Accumulateur au plomb (1) selon la revendication 5, dans lequel une concentration de l'ion aluminium est de 0,02

à 0,14 mol/L.

7. Accumulateur au plomb (1) selon l'une quelconque des revendications 1 à 6, dans lequel la matière d'électrode négative (33) comprend en outre une matière carbonée.

8. Accumulateur au plomb (1) selon la revendication 7, dans lequel la matière carbonée est le noir de Ketjen ou le graphite écailleux.

9. Accumulateur au plomb (1) selon l'une quelconque des revendications 1 à 8, dans lequel le groupe de plaques d'électrode (11) comprend une étoffe non tissée entre la plaque d'électrode négative (13) et le séparateur (14), et la plaque d'électrode négative (13) et l'étoffe non tissée entrent en contact l'une avec l'autre.

10. Accumulateur au plomb (1) selon la revendication 9, dans lequel l'étoffe non tissée comprend au moins une fibre choisie dans un groupe constitué par une fibre de verre, une fibre de polyoléfine et une fibre constituée de pâte.

11. Accumulateur au plomb (1) selon l'une quelconque des revendications 1 à 10, dans lequel la matière d'électrode positive (23) présente une aire spécifique de 4 $m^2/g$ ou plus.

12. Accumulateur au plomb (1) selon l'une quelconque des revendications 1 à 11, dans lequel la matière d'électrode négative (33) présente une aire spécifique de 0,4 $m^2/g$ ou plus.

13. Accumulateur au plomb (1) selon l'une quelconque des revendications 1 à 12, dans lequel la solution électrolytique présente une densité relative de 1,25 à 1,29.

14. Accumulateur au plomb (1) selon l'une quelconque des revendications 1 à 13, dans lequel D1/A1 est de 0,85 ou plus, dans lequel D1 représente une épaisseur du groupe de plaques d'électrode (11) et A1 représente une dimension interne de la chambre de cellules (52) dans une direction d'empilement du groupe de plaques d'électrode (11).

15. Accumulateur au plomb (1) selon l'une quelconque des revendications 1 à 14, dans lequel
le séparateur (14) comprend une nervure (42, 43) et une portion de base (41) supportant la nervure (42, 43),
la portion de base (41) présente une épaisseur de 0,3 mm ou moins, et
la nervure (42, 43) présente une hauteur de 0,6 mm ou moins.

16. Accumulateur au plomb (1) selon l'une quelconque des revendications 1 à 15, dans lequel la matière d'électrode positive (23) comprend une matière active d'électrode positive, la matière d'électrode négative (33) comprend une matière active d'électrode négative, une teneur en matière active d'électrode positive vis-à-vis d'une masse p1 de la matière d'électrode positive (23) est de 95 % en masse ou plus, et une teneur en matière active d'électrode négative vis-à-vis d'une masse n1 de la matière d'électrode négative (33) est de 93 % en masse ou plus.

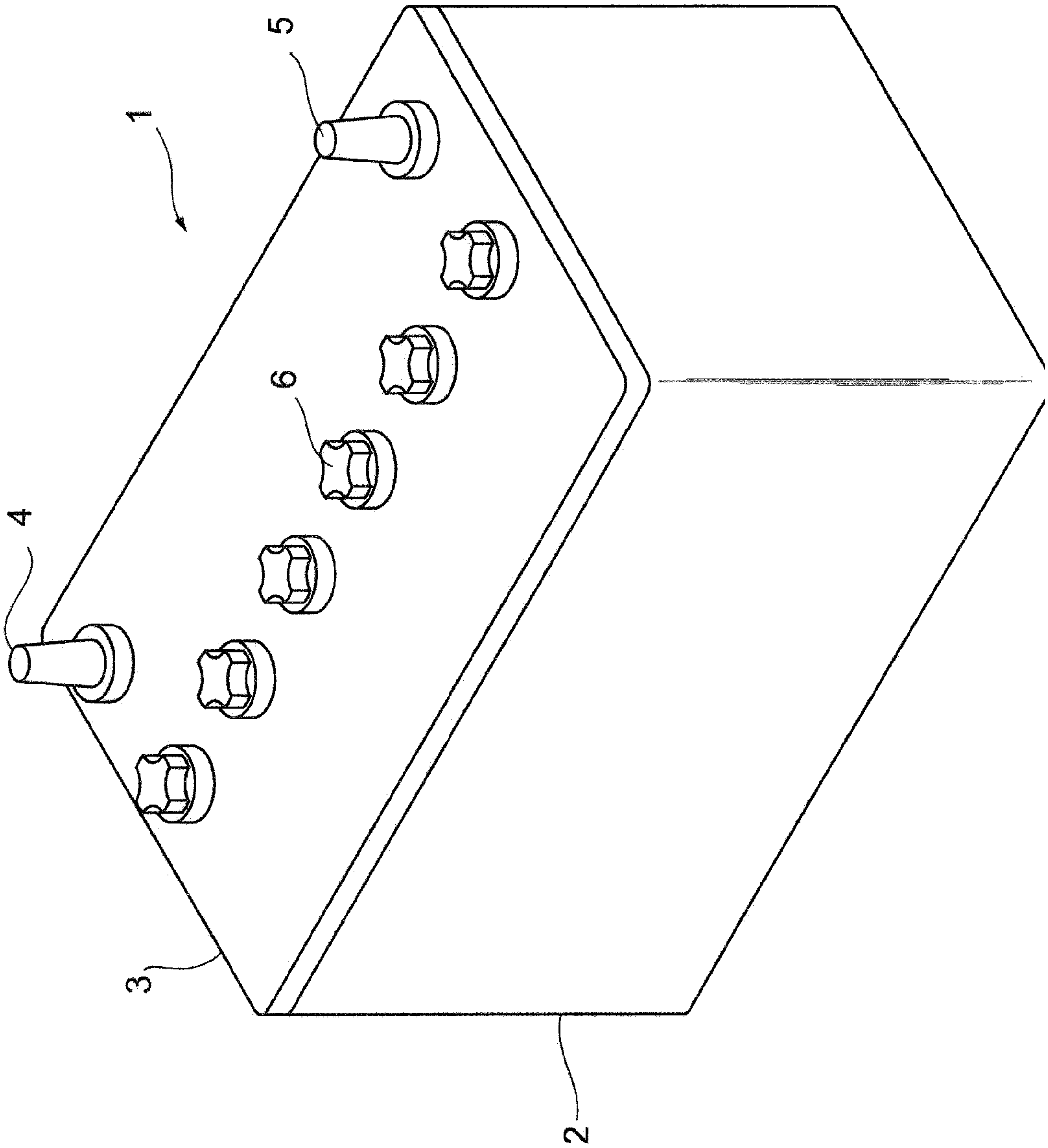


Fig.1

Fig.2

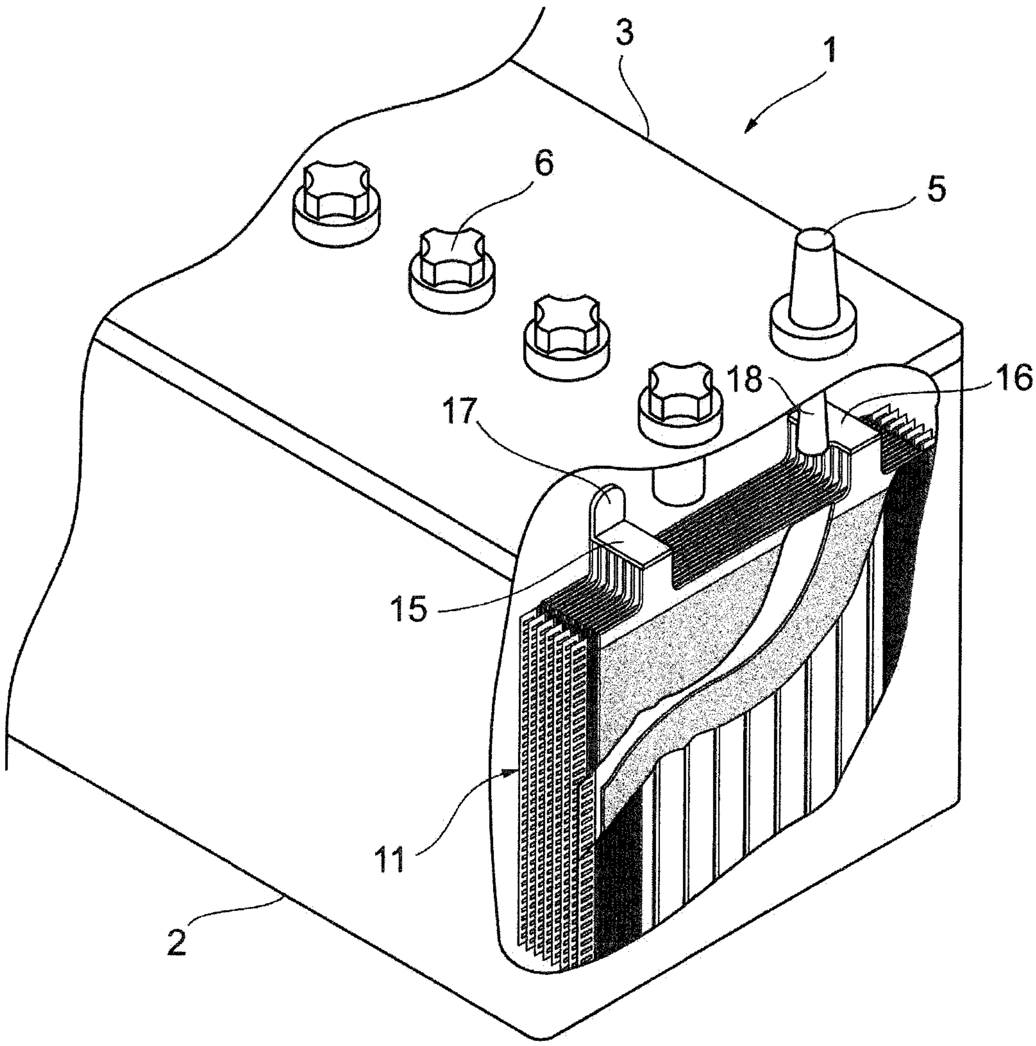

Fig.3

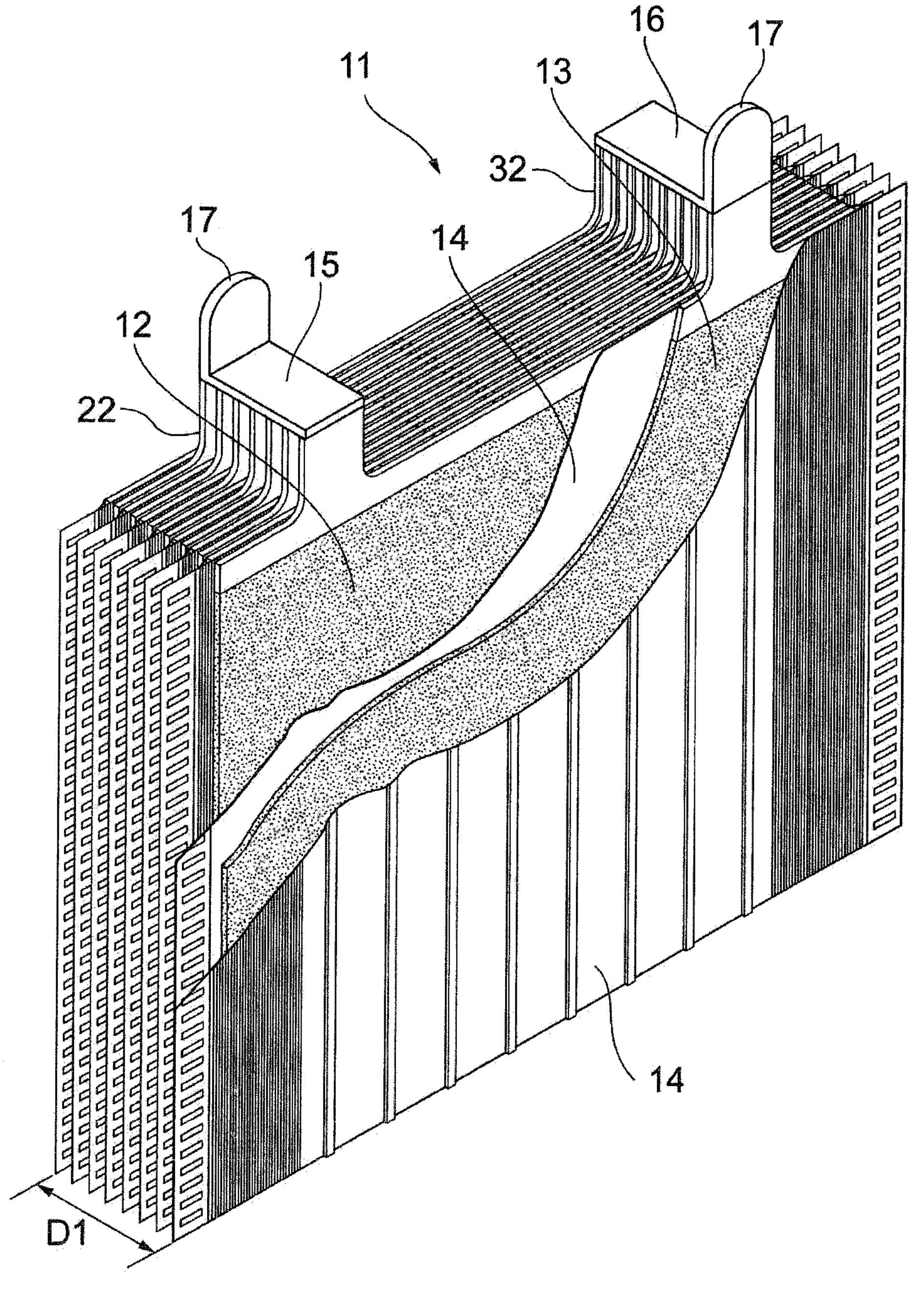

Fig.4

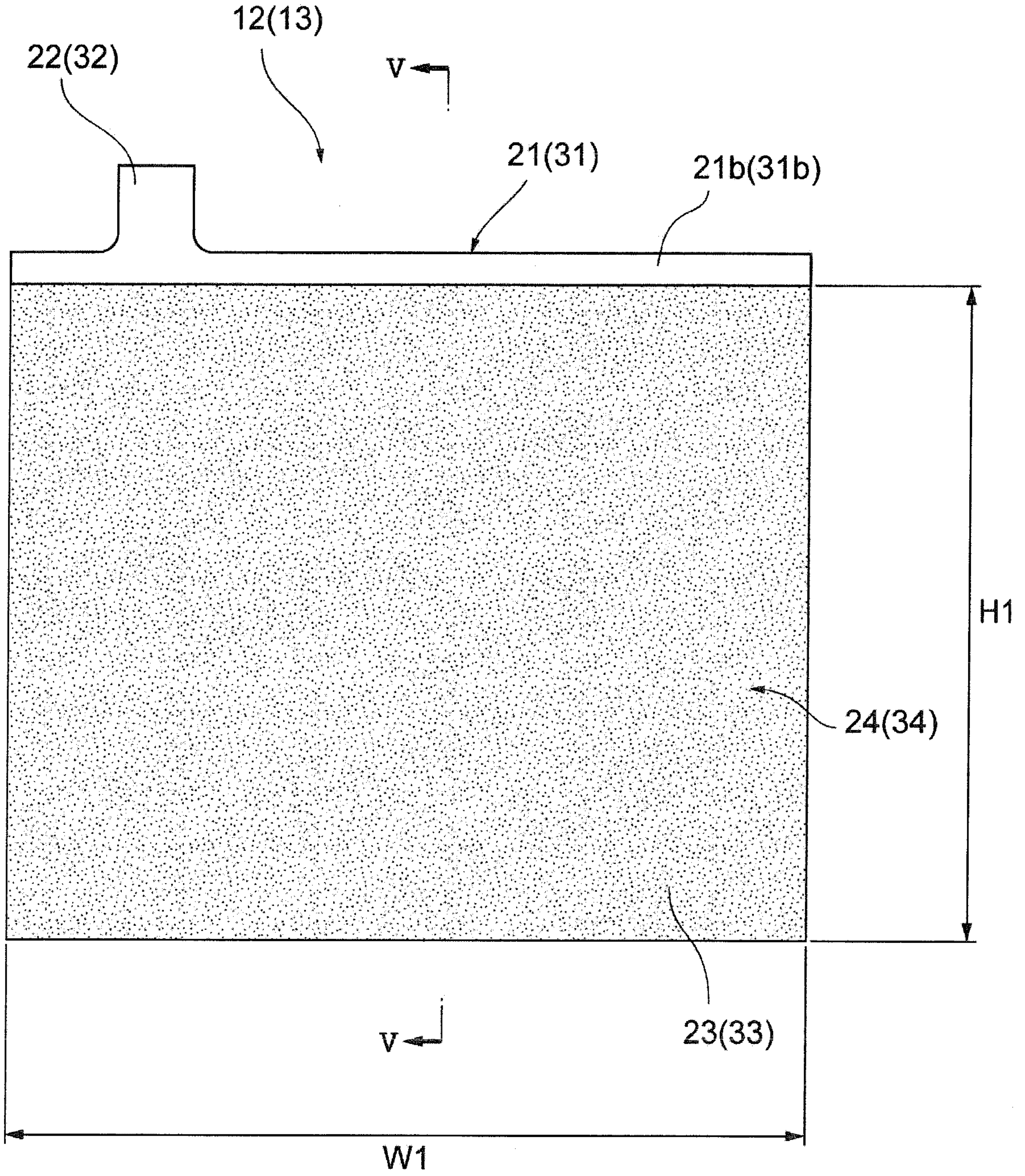

Fig.5

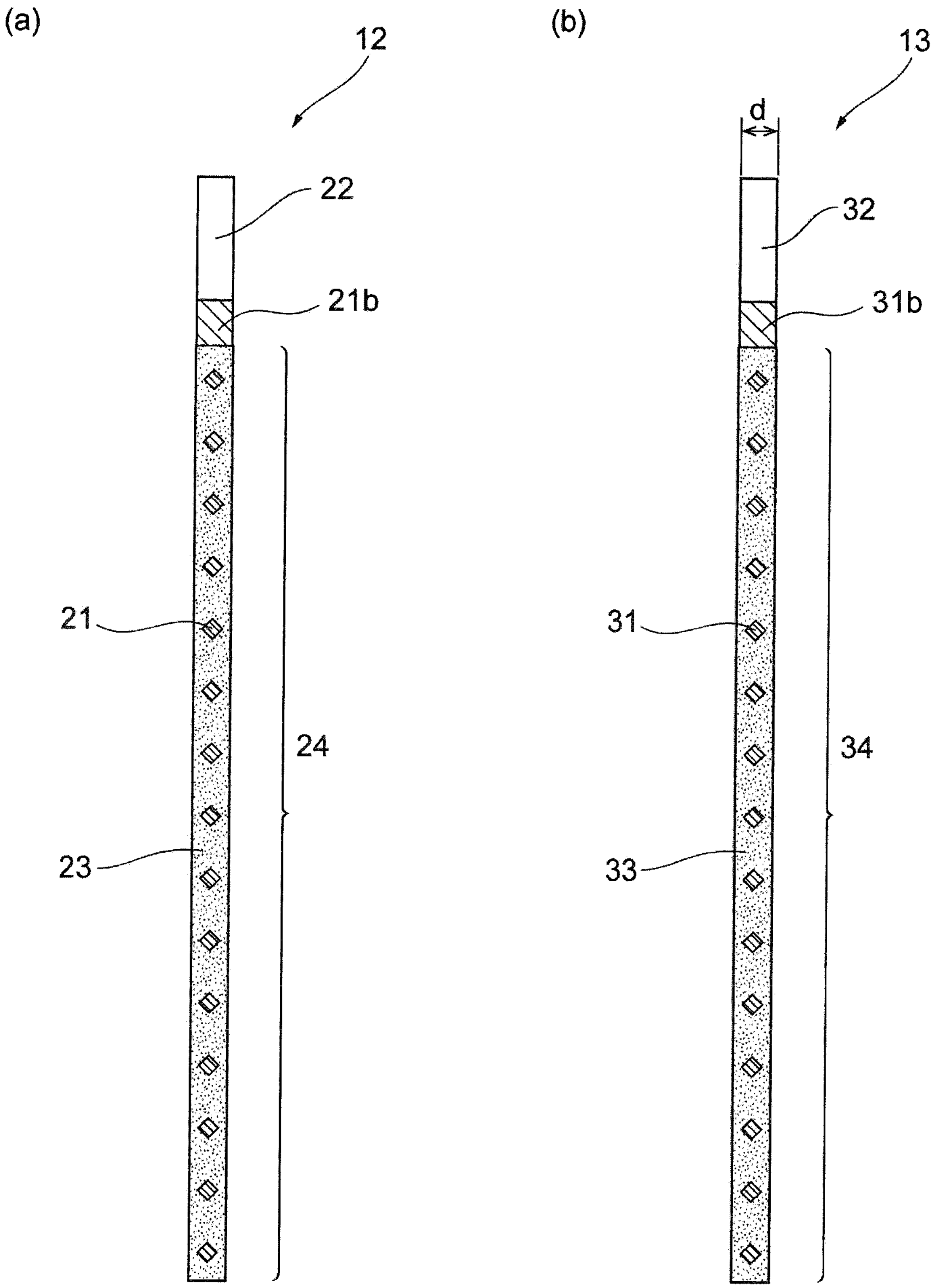

*Fig.6*

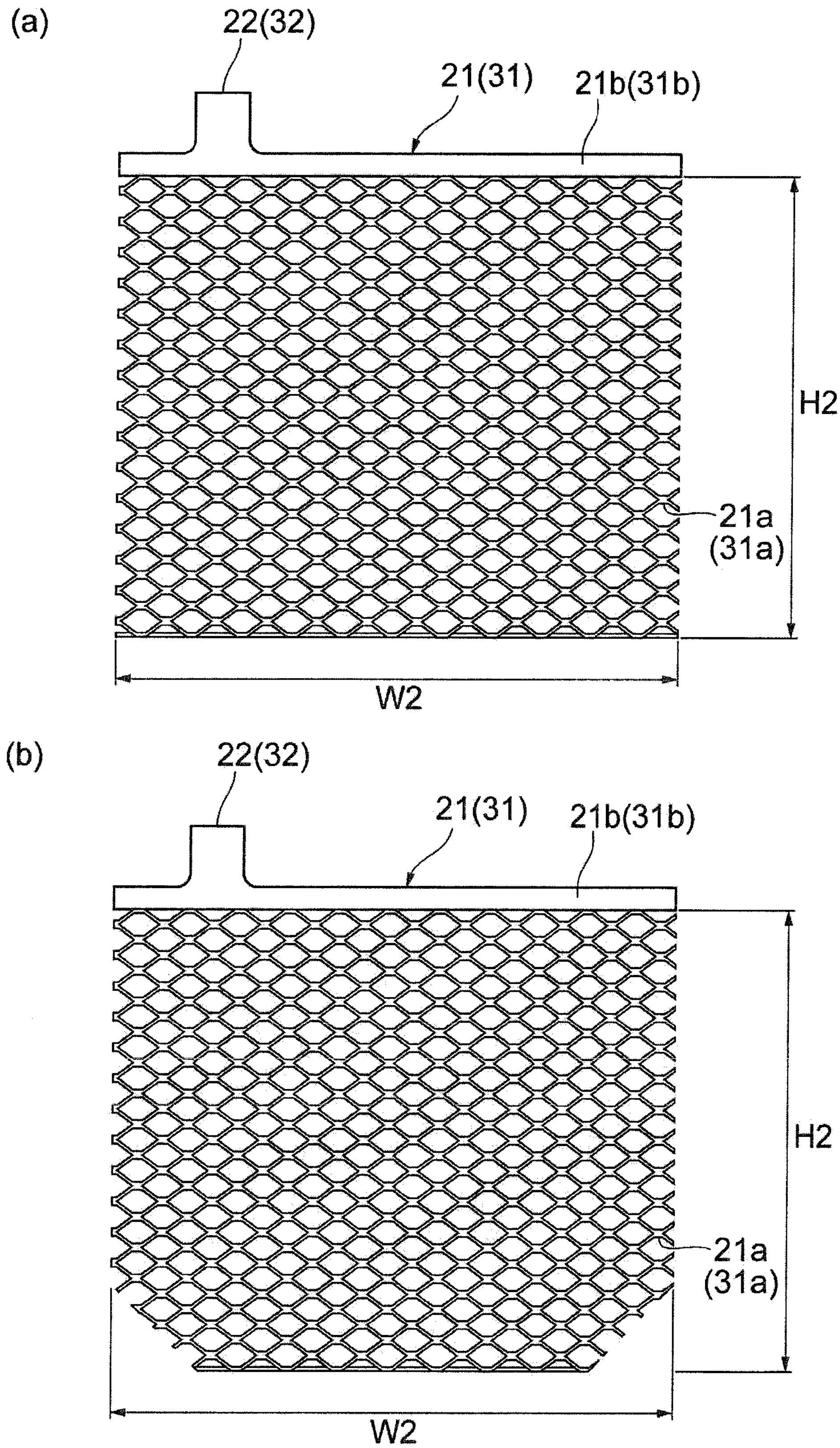
(a)
22(32)
21(31)
21b(31b)
H2
21a
(31a)
W2
(b)
22(32)
21(31)
21b(31b)
H2
21a
(31a)
W2

*Fig.7*

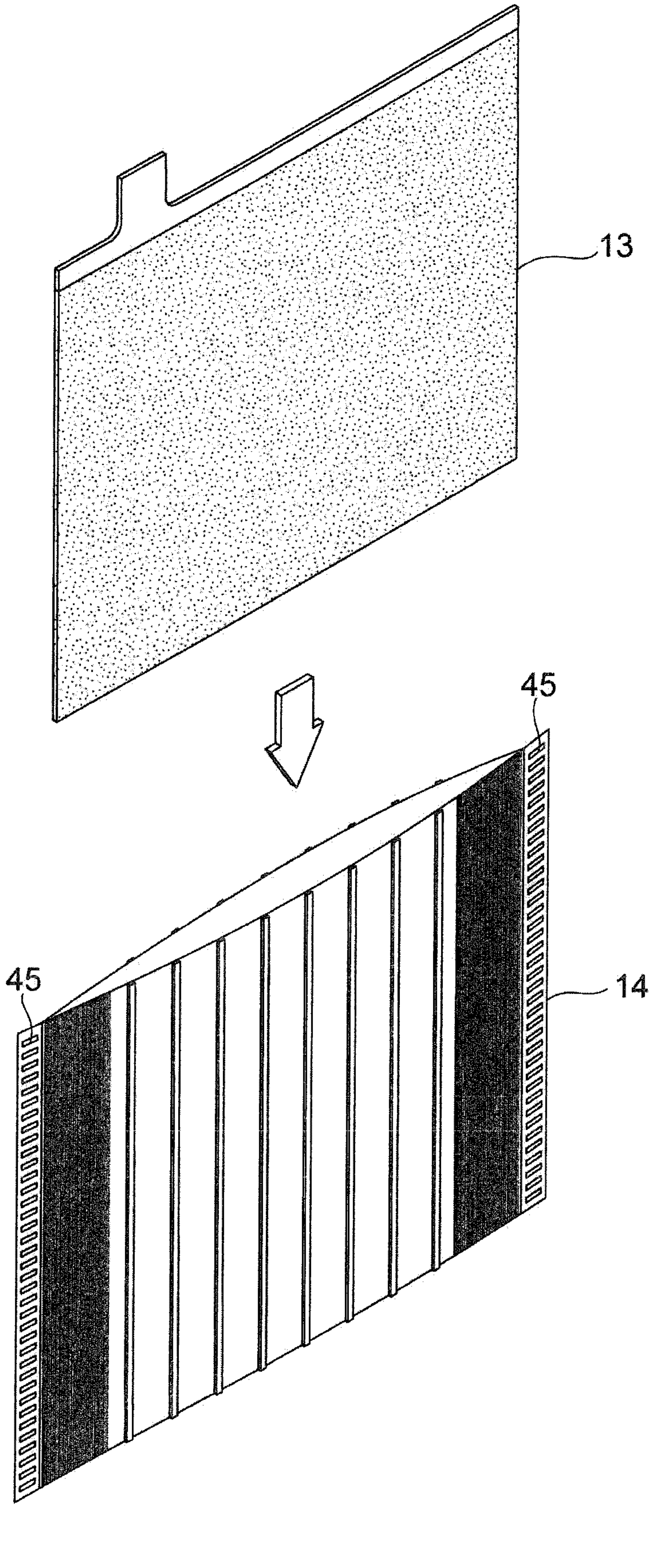

Fig.8

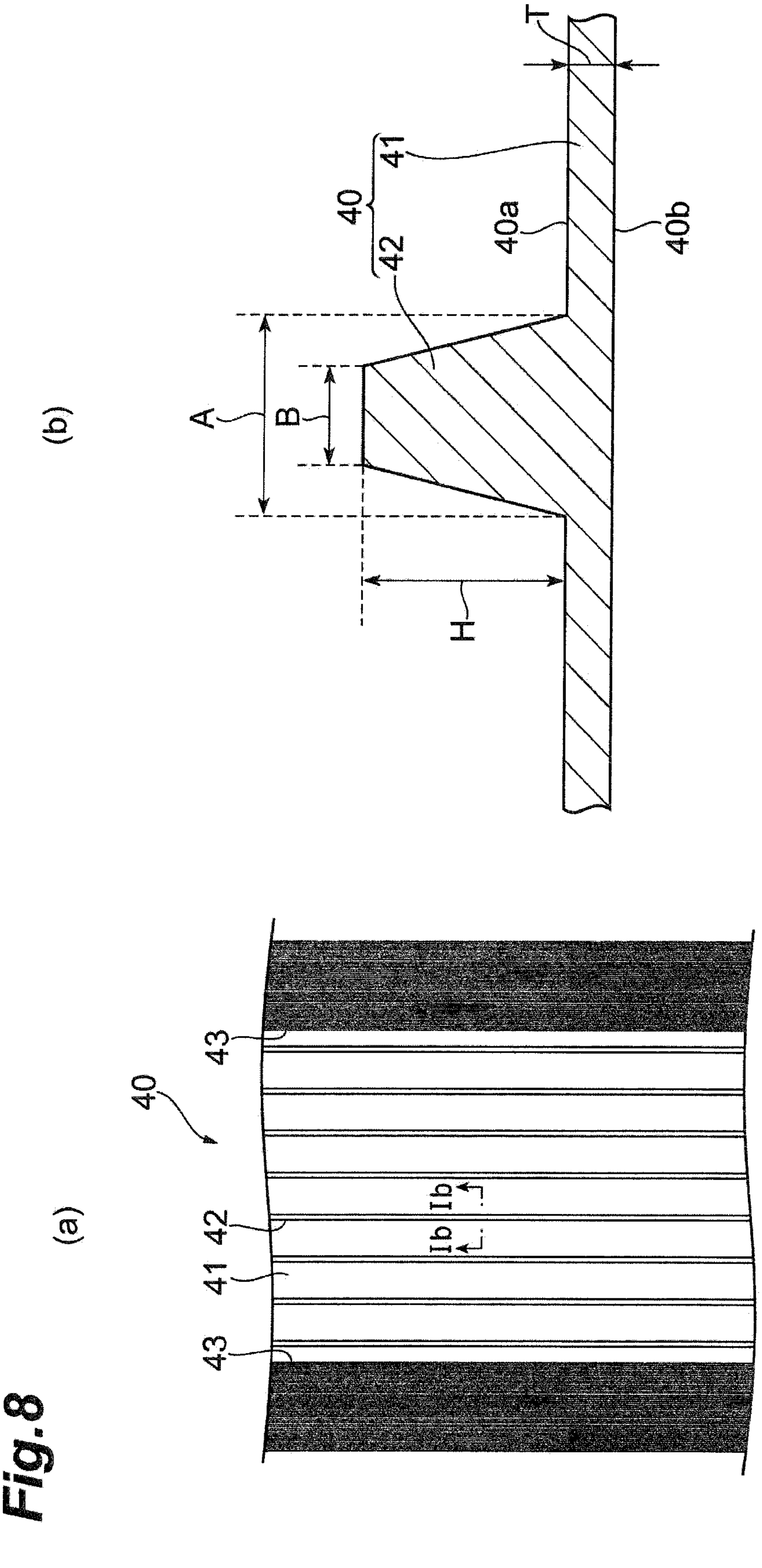

Fig.9

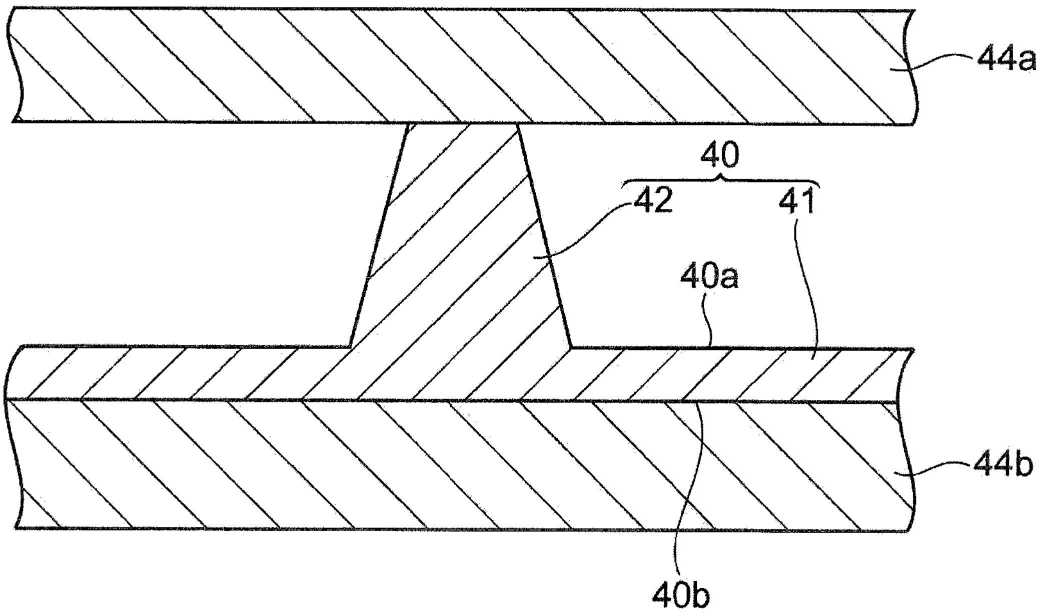

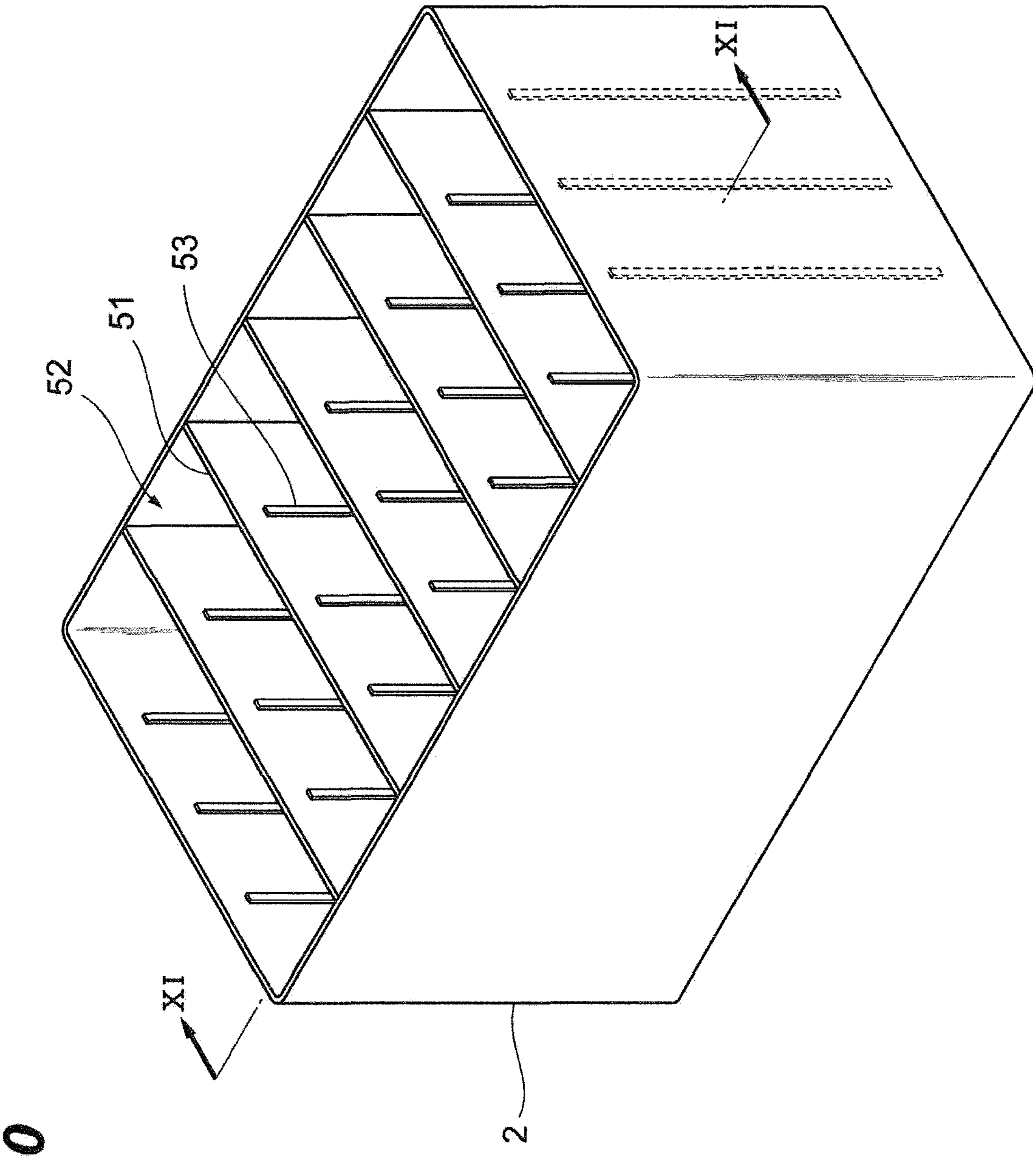


Fig.10

Fig.11

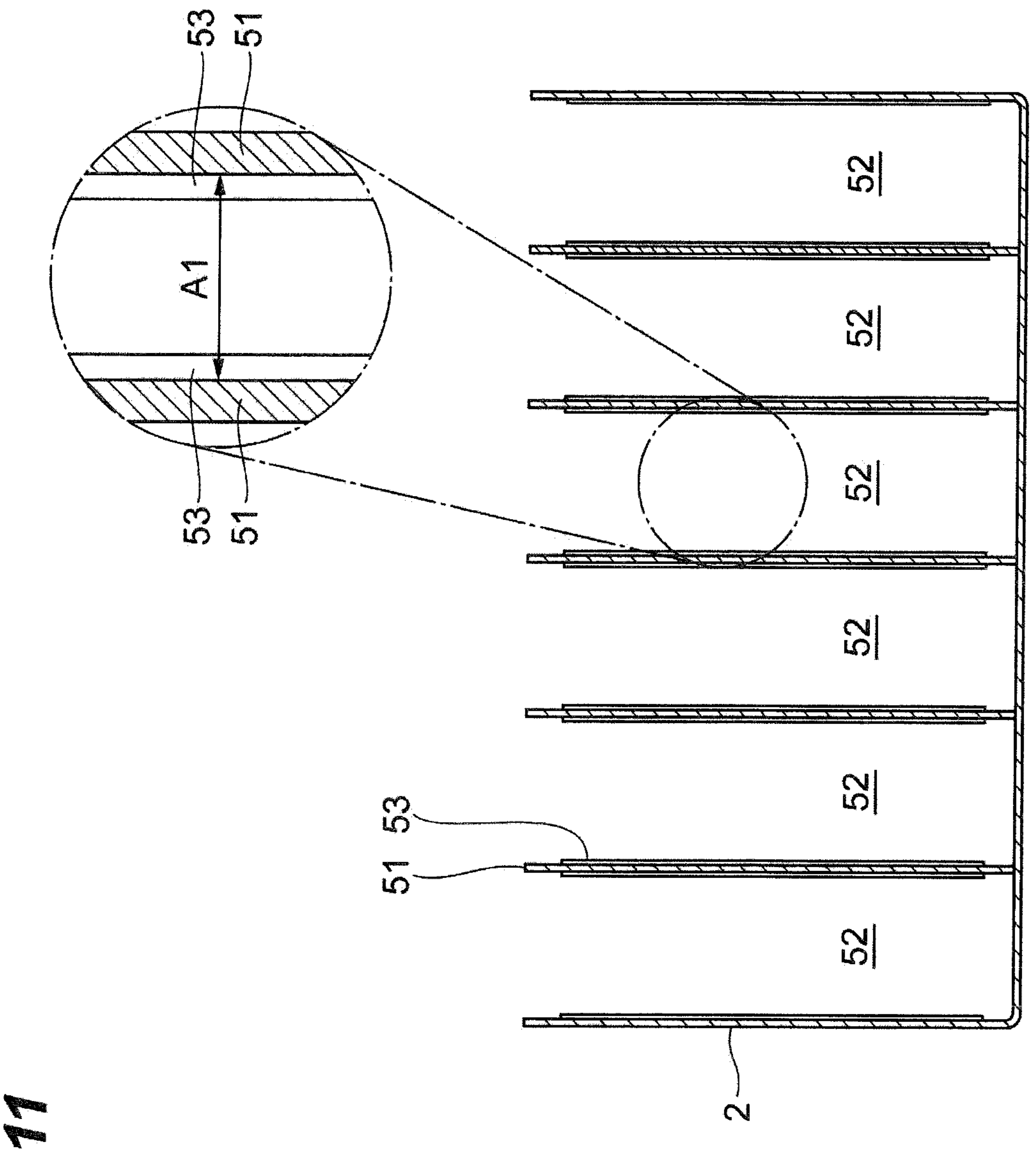

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4515902 B
- US 2015200424 A1